# EUROPEAN PATENT APPLICATION

(11) **EP 4 557 089 A1**
(43) Date of publication of application: **21.05.2025**
(21) Application number: 23845423.5
(22) Date of filing: 20.07.2023
(51) Int. Cl.: G06F 9/4401

(54) **CONFIGURATION INFORMATION MANAGEMENT METHOD AND APPARATUS, AND SERVER**

(30) Priority: 29.07.2022 CN 202210908371
(71) Applicant: Huawei Technologies Co., Ltd., Shenzhen, Guangdong 518129 (CN)
(72) Inventor: YU, Fei, Shenzhen, Guangdong 518129 (CN); WU, Huabin, Shenzhen, Guangdong 518129 (CN); CHEN, Yingliang, Shenzhen, Guangdong 518129 (CN)
(74) Representative: Grünecker Patent- und Rechtsanwälte PartG mbB
(86) International application number: PCT/CN2023/108352
(87) International publication number: WO 2024/022212

(57) **Abstract**

A configuration information management method is provided. The method is applied to a server that includes a management apparatus, and includes: The management apparatus obtains first configuration information and second configuration information, verifies consistency between the first configuration information and the second configuration information to obtain a consistency verification result, and starts the server based on the consistency verification result. The first configuration information is configuration information stored in a baseboard management controller BMC of the server, and the second configuration information is a backup that is of the configuration information of the server and that is backed up at a first moment. In the method, both the BMC of the server and storage space that is accessible to the BMC store the configuration information of the server, so that the server can also be normally started when the BMC or another component of the server is replaced.

## Description

This application claims priority to Chinese Patent Application No. 202210908371.4, filed with the China National Intellectual Property Administration on July 29, 2022 and entitled "CONFIGURATION INFORMATION MANAGEMENT METHOD AND APPARATUS, AND SERVER", which is incorporated herein by reference in its entirety.

### TECHNICAL FIELD

This application relates to the field of computer technologies, and in particular, to a configuration information management method and apparatus, and a server.

### BACKGROUND

Resource allocation and management of a product of a server both depends on a hardware topology. Therefore, every time a hardware configuration is added to the product of the server, a baseboard management controller (baseboard management controller, BMC) and a basic input/output system (basic input/output system, BIOS) of the server usually need to be adapted and developed again based on latest hardware configurations of the product of the server.

To decouple hardware configurations from software designs in the server, a current solution is to store configuration information of the server in a specific component of the server, for example, in the BMC of the server. However, when the configuration information of the server is stored in the BMC, if the BMC is replaced, a new BMC for replacement cannot obtain the configuration information of the server. Consequently, the server cannot be normally started.

### SUMMARY

This application provides a configuration information management method and apparatus, and a server. In this method, a BMC of the server and storage space that is accessible to the BMC both store configuration information of the server, so that the server can also be normally started when the BMC or another component of the server is replaced.

According to a first aspect, a configuration information management method is provided. The method is applied to a server that includes a management apparatus, and the method is performed by the management apparatus. The method includes: obtaining first configuration information and second configuration information, where the first configuration information is configuration information that is of the server and that is stored in a BMC of the server, and the second configuration information is backup data that is of the configuration information of the server and that is backed up at a first moment; verifying consistency between the first configuration information and the second configuration information to obtain a consistency verification result; and starting the server based on the consistency verification result.

According to the method provided in this application, the configuration information of the server is stored in the BMC of the server, and the configuration information is backed up in the server. In this way, the consistency between the configuration information that is in the BMC and the backup configuration information can be verified, and the server can be normally started in a startup phase of the server based on the consistency verification result. Further, when either of the BMC of the server or a server component configured to store copy data of the configuration information is replaced, according to the method provided in this application, a problem can be avoided in which the server cannot be normally started (or performance is low after the server is started) because the BMC of the server cannot obtain the configuration information of the server or obtains incorrect configuration information of the server.

In a possible design manner, before the obtaining first configuration information and second configuration information, the foregoing method further includes: backing up the configuration information of the server at the first moment to obtain the second configuration information, where the first moment is any moment before the server is started this time, and the second configuration information is stored in storage space that is of the server and that is accessible to the BMC.

In the possible design manner, an objective of storing the configuration information of the server in the BMC of the server and the storage space that is of the server and that is accessible to the BMC is implemented before the server is started this time.

In another possible design manner, when the server is a server of a new infrastructure, the storage space that is of the server and that is accessible to the BMC is storage space of a component in the server. The component includes a basic computing unit and/or a functional component, the functional component includes at least one of a storage unit, an input/output I/O unit, an acceleration unit, a memory expansion unit, a heat dissipation component, a power supply component, a computing component, and a management component. The storage space that is of the component and that is accessible to the BMC is a non-volatile storage medium in the component.

In another possible design manner, when the server is a conventional server, the storage space that is of the server and that is accessible to the BMC is a non-volatile storage medium disposed on a mainboard of the server.

The backup data of the configuration information of the server is stored in a non-volatile storage medium of any one or more components, different from the BMC, in the server of the new infrastructure, or the backup data of the configuration information is stored in the non-volatile storage medium of the mainboard of the conventional server. In this way, even if the BMC of the server is replaced (for example, replaced for maintenance) before the server is started this time, a new BMC for replacement may also obtain, in this startup process of the server, the configuration information stored in the mainboard or the component, so that a BIOS may obtain the configuration information from the BMC to start the server.

In another possible design manner, the starting the server based on the consistency verification result includes: when the consistency verification result is that the verification of the consistency between the first configuration information and the second configuration information succeeds, determining the first configuration information or the second configuration information as target configuration information; and starting the server based on the target configuration information.

In another possible design manner, the starting the server based on the consistency verification result includes: when the consistency verification result is that the verification of the consistency between the first configuration information and the second configuration information fails, determining, according to a preset rule, the first configuration information or the second configuration information as the target configuration information; and starting the server based on the target configuration information. The preset rule indicates a manner in which configuration information of a higher version, either the first configuration information or the second configuration information, is determined as the target configuration information, or a manner in which the target configuration information is determined from the first configuration information and the second configuration information based on a user indication, or a manner in which configuration information recording time information that is closer to a current moment, either the first configuration information or the second configuration information, is determined as the target configuration information.

In the two possible design manners, the management apparatus may determine the target configuration information for starting the server, based on the result of the verification of the consistency between the first configuration information and the second configuration information, so that the server can be normally started.

In another possible design manner, the foregoing method further includes: updating configuration information, either the first configuration information or the second configuration information, that is different from the target configuration information to the target configuration information.

In the possible design, when the server is started this time, the result of the verification of the consistency between the first configuration information and the second configuration information is a failure, and the management apparatus determines the target configuration information based on the user indication. In this case, if the management apparatus updates the configuration information that is stored in the BMC or the mainboard/component of the server and that is different from the target configuration information to the target configuration information, when the server is started next time and a product configuration of the server is not updated by then, verification of the consistency between the first configuration information and the second configuration information can succeed. In other words, without obtaining the user indication again, the management apparatus can determine configuration information specified by the user when the server is started this time, as the target configuration information used when the server is started next time. In this way, in the possible design, user operations can be reduced and user experience can be improved.

In another possible design manner, before the verifying consistency between the first configuration information and the second configuration information, the method further includes: verifying integrity of the first configuration information and integrity of the second configuration information to obtain an integrity verification result; and when the integrity verification result is a success, performing an operation of verifying the consistency between the first configuration information and the second configuration information.

The first configuration information pre-stored in the BMC of the server and the second configuration information pre-stored in the mainboard/component of the server may be illegally modified, for example, may be maliciously modified by a network attacker or may be modified by an unauthorized user. Alternatively, it may be understood that, except an update or a modification of the configuration information when the server normally updates the product configuration (for example, performs capacity expansion), all modifications (for example, tampering content of the configuration information that is normally updated or deleting data in the configuration information that is normally updated) to the first configuration information pre-stored in the BMC and the second configuration information pre-stored in the mainboard/component of the server are considered as illegal modifications. On this basis, in the possible design, an integrity verification can be performed on the first configuration information stored in the BMC and the second configuration information stored in the mainboard/component of the server in the startup phase of the server, to ensure security of the configuration information stored in the BMC and the mainboard/component of the server, and further ensure that the server is normally started based on configuration information that is not illegally modified.

According to a second aspect, this application provides a management apparatus, and the management apparatus is used in a server.

In a possible design manner, the management apparatus is configured to perform any method provided in the first aspect. In this application, the management apparatus may be divided into functional modules according to any method provided in the first aspect. For example, each functional module may be obtained through division based on each corresponding function, or two or more functions may be integrated into one processing module. For example, in this application, the management apparatus may be divided into an obtaining unit, a verification unit, a starting unit, and the like based on functions. For descriptions of possible technical solutions performed by the foregoing functional modules obtained through division and beneficial effects, refer to the technical solutions according to the first aspect or the possible designs corresponding to the first aspect. Details are not described herein again.

In another possible design, the foregoing management apparatus includes: one or more processors and a communication interface, where the one or more processors receive or send data through the communication interface, and the one or more processors are configured to invoke program instructions stored in a storage, to enable the management apparatus to perform, in a startup phase of the server, any method provided in any one of the first aspect and the possible design manners of the first aspect.

In another possible design, the management apparatus is a baseboard management controller BMC of the server.

According to a third aspect, this application provides a computer-readable storage medium. The computer-readable storage medium includes program instructions. When the program instructions are run on a processor, the processor is enabled to perform any method provided in any possible implementation of the first aspect.

According to a fourth aspect, this application provides a chip system, including a logic circuit, and the chip system is configured to perform any method provided in an implementation of the first aspect.

It may be understood that any one of the apparatus, the computer storage medium, the chip system, or the like provided above may be used in the corresponding method provided above. Therefore, for beneficial effects that can be achieved by any one of the apparatus, the computer storage medium, the chip system, or the like, refer to the beneficial effects of the corresponding method. Details are not described herein again.

In this application, a name of the management apparatus does not constitute a limitation on devices or functional modules. In actual implementation, these devices or functional modules may have other names. Each device or functional module falls within the scope defined by the claims and their equivalent technologies in this application, provided that a function of the device or functional module is similar to that described in this application.

### BRIEF DESCRIPTION OF DRAWINGS

FIG. 1 is a diagram of a manner of connection between a mainboard of a server and a BMC;
FIG. 2 is a diagram of another manner of connection between a mainboard of a server and a BMC;
FIG. 3 is a diagram of a hardware structure of a configuration information management apparatus according to an embodiment of this application;
FIG. 4 is a schematic flowchart of a configuration information management method according to an embodiment of this application;
FIG. 5 is a schematic flowchart of another configuration information management method according to an embodiment of this application;
FIG. 6 is a schematic flowchart of still another configuration information management method according to an embodiment of this application;
FIG. 7 is a diagram of an infrastructure of a server of a new infrastructure according to an embodiment of this application;
FIG. 8 is a schematic flowchart of still another configuration information management method according to an embodiment of this application;
FIG. 9 is a schematic flowchart of still another configuration information management method according to an embodiment of this application;
FIG. 10 is a logic diagram in which a configuration information management method provided in an embodiment of this application is applied to a server of a new infrastructure according to an embodiment of this application; and
FIG. 11 is a diagram of a structure of a configuration information management apparatus 110 according to an embodiment of this application.

### DESCRIPTION OF EMBODIMENTS

For ease of understanding, some terms or technologies in embodiments of this application are first described.

### (1) BMC

The BMC is configured to monitor and manage a computer hardware system. For example, the BMC may monitor a temperature, a voltage, and the like of a mainboard in the computer hardware system, or monitor an operating status of hardware such as a fan, a power source, and the like in the computer hardware system. When an error occurs in the computer hardware system, the BMC may restart the computer hardware system by reset, to ensure that the computer hardware system can be restored to a healthy status in a timely manner.

A system (which may also be referred to as a small system) independent of a computer operating system (operating system, OS) may be disposed in the BMC, and generally neither depends on another hardware (for example, a central processing unit (central processing unit, CPU), or a memory) in a computer, nor depends on a BIOS and the OS of the computer. However, the BMC may interact with the BIOS and the OS, to better manage the computer hardware system. For example, when the BMC collaborates with OS system management software, the BMC can better manage the computer hardware system.

It may be understood that an entity of the BMC may be a chip, an integrated circuit, or the like. During specific implementation, a manner of connection between the BMC and the mainboard mainly includes the following two forms: a plug-in card form and an onboard form. Specifically, the BMC may be connected to a mainboard of a server in the onboard form, or the BMC may be connected to a mainboard of a server in the plug-in card form.

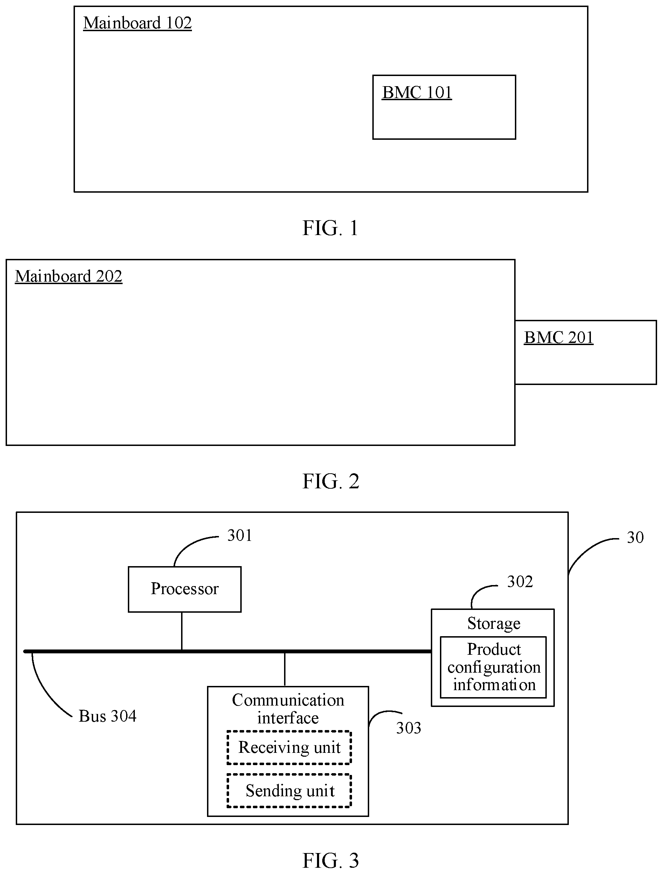

For example, FIG. 1 and FIG. 2 separately shows a diagram of a manner of connection between the mainboard of the server and the BMC. As shown in FIG. 1, a BMC 101 is disposed on a mainboard 102 of the server in the onboard form. As shown in FIG. 2, a BMC 201 is plugged into a mainboard 202 of the server in the plug-in card form.

### (2) BIOS

The BIOS is the most basic software code loaded on a computer hardware system. The BIOS is a bottom-layer software program under an OS, and is an abstraction layer between computer hardware and the OS. The BIOS is generally used to configure hardware parameters, to prepare for running of the OS (which mainly refers to an OS on a main processor of the computer). Main functions of the BIOS are power-on, self-test, CPU initialization, memory initialization, input/output device detection, and startable device detection, and eventually guiding an OS startup of the main processor of the computer.

It may be understood that a chip configured to implement a BIOS function may be referred to as a BIOS chip.

To ensure that the server can still be normally started after some components in the server are replaced, this application provides a configuration information management method. This method is applied to a server that includes a management apparatus. In this method, before the server is started this time (for example, when initial configuration of the server is completed), the management apparatus performs a backup operation on obtained configuration information of the server, to back up the configuration information of the server in the BMC in the server and in another component (such as the mainboard or the following component) in the server. A position at which the configuration information of the server is backed up may be any non-volatile storage medium that is in the server and that is accessible to the management apparatus. For example, the configuration information of the server is backed up in the mainboard of the server. Before the server is started this time, both the mainboard and the BMC that are of the server store the configuration information of the server. In this way, after the server is powered on, only consistency between configuration information stored in the mainboard and configuration information stored in the BMC needs to be verified, so that target configuration information, either the configuration information of the server stored in the mainboard or the configuration information of the server stored in the BMC, is determined based on a consistency verification result. Further, the server may be started based on the target configuration information. In the method, a problem can be avoided in which after the BMC is replaced, the server cannot be normally started or performance is low after the server is started because a new BMC for replacement of the server cannot obtain the configuration information of the server or obtains incorrect configuration information of the server. In other words, according to the method provided in this application, the server can be normally started when the performance of the server is ensured. For detailed descriptions of configuration information consistency verification, refer to related descriptions of the following method. Details are not described herein.

In a possible implementation, the method according to an embodiment of this application may be applied to a conventional server. The server includes a mainboard and a BMC, and the configuration information of the server is pre-stored in both the mainboard and the BMC that are of the server. For example, first configuration information is pre-stored in the BMC, and second configuration information is pre-stored in the mainboard. For detailed descriptions of the first configuration information and the second configuration information, refer to the following descriptions. Details are not described herein.

A manner of connection between the BMC and the mainboard may be the plug-in card manner shown in FIG. 2. It should be understood that, by performing the method according to an embodiment of this application, a problem can be avoided in which the server cannot be normally started because the BMC cannot obtain the configuration information of the server or obtains incorrect configuration information of the server. For detailed descriptions of the BMC, refer to the foregoing descriptions. Details are not described herein again.

In addition, the foregoing mainboard (which may also be referred to as a conventional mainboard) may be understood as an entire hardware module integrating a plurality of electronic element parts (which may also be referred to as assemblies) of the server. In other words, the plurality of assemblies of the server are integrated into one hardware module. In an example, the plurality of assemblies of the server may include, for example, a heat dissipation fan, a hard disk backplane, and an input/output (input/output, I/O) interface.

An embodiment of this application further provides a configuration information management apparatus. The management apparatus may be used in the foregoing conventional server, or may be used in a server of a new infrastructure described below. This is not limited herein. The management apparatus is configured to perform the configuration information management method according to an embodiment of this application. Optionally, the management apparatus may be a BMC disposed in the server, or the management apparatus may be any integrated circuit or chip that is integrated in the server and that can implement the method according to an embodiment of this application. This is not specifically limited herein.

In an example, FIG. 3 is a diagram of a hardware structure of a configuration information management apparatus according to an embodiment of this application. As shown in FIG. 3, a management apparatus 30 includes a processor 301, a storage 302, a communication interface 303, and a bus 304. The processor 301, the storage 302, and the communication interface 303 are connected through the bus 304.

The processor 301 is a control center of the management apparatus 30, and may be a general-purpose CPU. The processor 301 may alternatively be another general-purpose processor, a digital signal processor (digital signal processor, DSP), an application-specific integrated circuit (application-specific integrated circuit, ASIC), an FPGA, a CPLD or another programmable logic device, an MCU, or the like.

The storage 302 is configured to store data to be accessed by program instructions or an application process. The processor 301 may execute the program instructions in the storage 302, to implement a method for starting a server according to an embodiment of this application.

The storage 302 includes a volatile storage or a non-volatile storage, or may include both a volatile storage and a non-volatile storage. The volatile storage may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile storage may be a random access memory (random access memory, RAM), used as an external cache. Through example but not limitative description, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The non-volatile storage may be a storage class memory (storage class memory, SCM), an SSD, an HDD, or the like. The storage class memory may be, for example, a non-volatile memory (non-volatile memory, NVM), a phase-change memory (phase-change memory, PCM), a persistent memory, or the like.

In a possible implementation, the storage 302 may be independent of the processor 301. The storage 302 is connected to the processor 301 through the bus 304, and is configured to store data, instructions, or program code. When the processor 301 invokes and executes the instructions or the program code stored in the storage 302, the method for starting the server according to an embodiment of this application can be implemented.

In another possible implementation, the storage 302 and the processor 301 are integrated.

The communication interface 303 is configured to implement communication and connection between the management apparatus 30 and another component (for example, the mainboard of the server shown in FIG. 1, or any component of the server) in the server in which the management apparatus 30 is located.

The bus 304 may be an industry standard architecture (industry standard architecture, ISA) bus, a peripheral component interconnect (peripheral component interconnect, PCI) bus, a PCIe, a unified bus (unified bus, UB, or Ubus), an extended industry standard architecture (extended industry standard architecture, EISA) bus, or the like. The bus may be classified into an address bus, a data bus, a control bus, and the like. For ease of representation, only one thick line is used to represent the bus in FIG. 3, but this does not indicate that there is only one bus or only one type of bus.

It should be noted that the structure shown in FIG. 3 does not constitute a limitation on the management apparatus 30. In addition to parts shown in FIG. 3, the management apparatus 30 may include more or fewer parts than the parts shown in FIG. 3, or combine some parts, or have different part arrangements.

With reference to the accompanying drawings, based on an infrastructure of the foregoing conventional server, the following first uses an example in which a plurality of hardware assemblies (for example, a heat dissipation fan, a hard disk backplane, and an I/O interface) of the server are integrated on a mainboard of the server, to describe a configuration information management method according to an embodiment of this application.

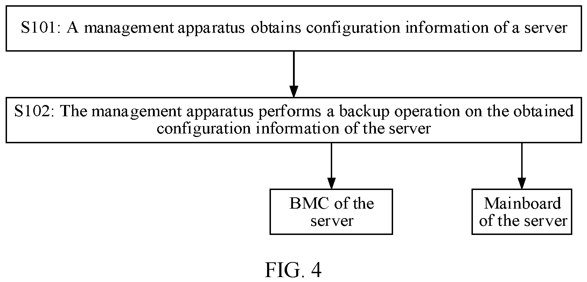

FIG. 4 is a schematic flowchart of a configuration information management method according to an embodiment of this application. For example, the method may be performed by a management apparatus having the hardware structure shown in FIG. 3, and mainly includes the following steps.

S101: The management apparatus obtains configuration information of a server.

The configuration information of the server is used to describe to-be-managed assemblies, and hardware information and parameter information thereof that are included in a component that is in the server. The component may be an assembly or a set of assemblies included in the server. For example, the configuration information of the server includes description information of hardware configurations, such as a quantity and positions of fans in the server, a quantity and positions of hard disk backplanes, and a size of a hard disk that can be accessed by the hard disk backplane. Usage of the hard disk backplane is that the hard disk is disposed on the hard disk backplane. The fan is for heat dissipation on hardware units in the server. Optionally, the configuration information may also include topology information and alarm information. The topology information indicates a topology relationship between components or assemblies included in a component, and the alarm information indicates alarm information about components or assemblies included in a component.

Optionally, after a product hardware configuration of the server is initially completed, the management apparatus may obtain configuration information that is input by a user through an input interface (for example, a keyboard) of the server and that is used to describe a current product configuration of the server.

In an example, the management apparatus is a BMC of the server. After the product hardware configuration of the server is initially completed, the BMC of the server obtains, through the input interface (for example, the keyboard) of the server, the configuration information that is input by the user and that is used to describe the current product hardware configuration of the server, and stores the obtained configuration information in a non-volatile storage medium of the BMC of the server. In embodiments of this application, the configuration information that is of the server and that is stored in the BMC is referred to as first configuration information.

S102: The management apparatus performs a backup operation on the obtained configuration information of the server, to back up backup data (or referred to as copy data) of the configuration information of the server in storage space that is of the server and that is accessible to the BMC.

Specifically, the management apparatus performs the backup operation on the configuration information of the server to obtain second configuration information, and the second configuration information may be stored in the BMC of the server and any storage space accessible to the BMC. In a conventional server, the storage space accessible to the BMC may be any non-volatile storage medium disposed on a mainboard of the conventional server, for example, an EEPROM or a flash memory (flash), which is not limited herein.

It should be understood that the management apparatus performs the backup operation on the configuration information of the server when the server is started.

In a possible implementation, in order to avoid a case in which the server cannot be normally started because the BMC and/or mainboard of the server is replaced during usage of the server, the management apparatus may periodically back up, in the BMC and in the non-volatile storage medium disposed on the mainboard, the configuration information obtained by the management apparatus. For example, the management apparatus is the BMC of the server. In order to avoid a case in which the server cannot be normally started because the BMC is replaced during usage of the server, the BMC may periodically back up, in the non-volatile storage medium disposed on the mainboard, the configuration information obtained by the BMC. Specifically, the BMC periodically writes the copy data of the configuration information obtained by the BMC into the non-volatile storage medium disposed on the mainboard.

In another possible implementation, every time the product configuration of the server is updated (for example, capacity expansion is performed on the server), the management apparatus may obtain configuration information corresponding to an updated product configuration of the server. Further, every time the management apparatus obtains the configuration information that indicates the updated product configuration of the server, the management apparatus may back up, in the BMC and in the non-volatile storage medium disposed on the mainboard, the obtained configuration information that indicates the updated product configuration of the server. For example, the management apparatus writes the obtained configuration information that indicates the updated product configuration of the server separately into the non-volatile storage medium of the BMC and the non-volatile storage medium disposed on the mainboard, to overwrite configuration information originally stored in the non-volatile storage medium of the BMC and the non-volatile storage medium disposed on the mainboard. The configuration information originally stored in the non-volatile storage medium of the BMC and the non-volatile storage medium disposed on the mainboard are configuration information written into the non-volatile storage medium of the BMC and the non-volatile storage medium disposed on the mainboard, when the management apparatus performs the backup operation on configuration information obtained last time.

In some examples, the management apparatus is the BMC of the server. Every time the BMC obtains the configuration information that indicates the updated product configuration of the server, the BMC may write the obtained configuration information that indicates the updated product configuration of the server into the non-volatile storage medium disposed on the mainboard, to overwrite the configuration information originally stored in the non-volatile storage medium.

Optionally, when the product configuration of the server is updated (for example, the capacity expansion is performed on the server), the management apparatus may obtain configuration information that is input by the user and that indicates this update of the server. For example, in a scenario of the capacity expansion, an updated configuration of the server this time refers to a hardware backplane added in this update of the server, compared with a product configuration of the server before this update. In this way, for this update of the server, the configuration information that is input by the user and that is obtained by the management apparatus, and all configuration information obtained by the management apparatus before this update constitute configuration information that is about the server and that indicates a product configuration of the server that is after this update.

Optionally, when the product configuration of the server is updated (for example, the capacity expansion is performed on the server), the management apparatus may also obtain configuration information that is input by the user and that indicates a product configuration that is obtained through this update of the server. This is not limited herein.

In some examples, the configuration information that is of the server and that is obtained by the management apparatus includes version information, and the version information indicates a version of configuration information that includes the version information. It should be understood that configuration information of different versions indicates different product configurations of the server. The different product configurations of the server include product configurations of the server obtained every time the server goes through one update of a product configuration of the server during usage of the server. It should be further understood that a higher version indicated by the version information in the configuration information of the server indicates that a server update operation corresponding to the configuration information is closer to a current moment.

For example, after the product hardware configuration of the server is initially completed, a version indicated by version information that is in the configuration information of the server is a version 1. When the server is in use for a time period, capacity expansion (namely, the 1^{st} update of the product configuration of the server) is performed on the initial product configuration of the server based on a use requirement. In this way, a version indicated by version information that is in configuration information of the server after this capacity expansion is a version 2. Similarly, for another time period, capacity expansion (namely, the 2^{nd} update of the product configuration of the server) is performed again, based on the use requirement, on a product configuration that is of the server and that is obtained through the 1^{st} update of the server. In this way, a version indicated by version information that is in configuration information of the server after this capacity expansion is a version 3. The version 3 is higher than the version 2, and the version 2 is higher than the version 1.

In some other examples, the management apparatus records information about time at which configuration information of the server is obtained. The time information indicates specific time at which the management apparatus obtains the configuration information that includes the time information. It should be understood that configuration information obtained by the management apparatus at different time indicates different product configurations of the server. The different product configurations of the server include a product configuration of the server obtained every time the server goes through one update of the product configuration of the server during the usage of the server.

For example, after the product hardware configuration of the server is initially completed, the management apparatus obtains the configuration information of the server, and records information about time at which the configuration information is obtained as time 1. When the server is in use for a time period, capacity expansion (namely, the 1^{st} update of the product configuration of the server) is performed on the initial hardware product configuration of the server based on a use requirement. In this case, the management apparatus obtains configuration information of the server after this capacity expansion, and records information about time at which the configuration information is obtained as time 2, and the time 2 is later than the time 1. Similarly, for another time period, capacity expansion (namely, the 2^{nd} update of the product configuration of the server) is performed again, based on a use requirement, on a product configuration that is obtained through the 1^{st} update of the server. In this case, the management apparatus obtains configuration information of the server after this capacity expansion, and records information about time at which the configuration information is obtained as time 3, and the time 3 is later than the time 2.

It should be understood that, for the second configuration information obtained by the management apparatus by performing the backup operation on the obtained first configuration information, the storage space that is of the server, that is accessible to the BMC, and that is used to store the second configuration information also records information about time at which the management apparatus obtains the first configuration information.

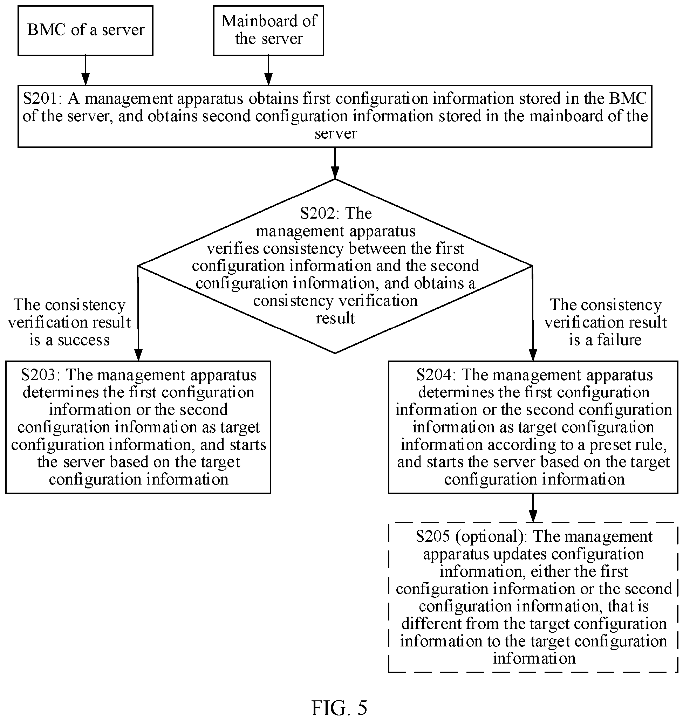

Further, for example, the BMC of the server stores the first configuration information, and the mainboard of the server stores the second configuration information. FIG. 5 is a schematic flowchart of another configuration information management method according to an embodiment of this application. For example, the method may be performed by a management apparatus having the hardware structure shown in FIG. 3, and mainly includes the following steps.

S201: The management apparatus obtains first configuration information stored in a BMC of a server, and obtains second configuration information stored in a mainboard of the server.

Specifically, after the server is powered on, the management apparatus disposed in the server is powered on and started. Further, the management apparatus obtains the first configuration information stored in the BMC of the server and the second configuration information stored in the mainboard of the server. The mainboard of the server is a mainboard of a conventional server.

Optionally, the management apparatus may read, through a communication interface, the first configuration information stored in the BMC of the server, and read, through a communication interface, the second configuration information stored in the mainboard of the server. This is not specifically limited herein.

In some examples, the management apparatus is the BMC of the server. The BMC reads the first configuration information stored in the BMC, and reads, through a communication interface of the BMC, the second configuration information stored in the mainboard of the server. This is not specifically limited herein.

Optionally, for example, the management apparatus is the BMC of the server. The first configuration information stored in the BMC is configuration information that is of the server, that is obtained by the BMC, that is input by a user, and that is stored in a non-volatile storage medium of the BMC. The second configuration information stored in the mainboard of the server is configuration information written into any non-volatile storage medium, disposed on the mainboard, after the BMC performs a backup operation on the obtained configuration information (for example, the first configuration information) at a first moment. The first moment is any moment after the BMC obtains the configuration information input by the user and before the server is started this time. This is not limited herein. A moment at which the server is started refers to a moment at which a startup operation of the server is triggered after the management apparatus performs at least one backup operation (for example, S102) on the obtained configuration information of the server.

Optionally, the first configuration information stored in the BMC and the second configuration information stored in the mainboard of the server are both configuration information written into the non-volatile storage medium of the BMC and any non-volatile storage medium, disposed on the mainboard of the server, after the management apparatus performs, at the first moment, the backup operation on the configuration information input by the user. This is not limited herein.

S202: The management apparatus verifies consistency between the first configuration information and the second configuration information, and obtains a consistency verification result.

It may be understood that either of the BMC or the mainboard of the server may be illegally replaced (for example, an unauthorized replacement of the BMC or mainboard of the server, or a replacement of a damaged BMC or mainboard during server maintenance), or the configuration information stored in the BMC or mainboard is maliciously replaced by an attacker. In other words, when the configuration information of the server is not updated normally, a product configuration that is of the server and that is indicated by configuration information (namely, configuration information originally stored in a new BMC or mainboard for replacement) stored in the BMC or mainboard for illegal replacement, or a product configuration that is indicated by configuration information for malicious replacement that is in the BMC or mainboard is different from a real product hardware configuration of the server. The product configuration that is indicated by the configuration information is different from the real product hardware configuration of the server. Consequently, an error occurs when the server initializes hardware resources. Further, the server cannot be normally started, or performance of the server is low after the server is started. Therefore, in a startup phase of the server, the management apparatus needs to verify the consistency between the first configuration information and the second configuration information, and determine, based on the consistency verification result, target configuration information that is used to start the server. Herein, the target configuration information may be considered as configuration information that indicates a current real product configuration of the server.

Specifically, the management apparatus determines whether the first configuration information and the second configuration information are completely the same, to verify the consistency between the first configuration information and the second configuration information, and obtain the consistency verification result.

When the management apparatus determines that the first configuration information and the second configuration information are completely the same, it indicates that the result of the verification of the consistency between the first configuration information and the second configuration information is a success. In this case, the management apparatus performs S203. When the management apparatus determines that the first configuration information and the second configuration information are different, it indicates that the result of the verification of the consistency between the first configuration information and the second configuration information is a failure. In this case, the management apparatus performs S204.

Optionally, the management apparatus may determine, through fully comparing, whether all configuration items and parameters thereof included in the first configuration information and all configuration items and parameters thereof included in the second configuration information, are completely the same, to determine whether the first configuration information and the second configuration information are completely the same. In this way, the consistency between the first configuration information and the second configuration information is verified.

Optionally, the management apparatus may determine whether sizes of the first configuration information and the second configuration information are the same, to determine whether the first configuration information and the second configuration information are completely the same. For example, the management apparatus may separately determine the sizes of the first configuration information and the second configuration information based on a message-digest algorithm (message-digest algorithm, MD5), and further determine whether the sizes of the first configuration information and the second configuration information are the same, to determine whether the first configuration information and the second configuration information are completely the same. In this way, the consistency between the first configuration information and the second configuration information is verified.

Specifically, in a possible implementation, the management apparatus may separately compute an MD5 value of the first configuration information and an MD5 value of the second configuration information based on the MD5 algorithm. In another possible implementation, header data of the first configuration information includes an MD5 value of the first configuration information, and header data of the second configuration information includes an MD5 value of the second configuration information. In this way, the management apparatus reads the MD5 value of the first configuration information from the header data of the first configuration information, and reads the MD5 value of the second configuration information from the header data of the second configuration information.

Further, when the management apparatus determines that the MD5 value of the first configuration information and the MD5 value of the second configuration information are the same, the management apparatus determines that the first configuration information and the second configuration information are completely the same. When the management apparatus determines that the MD5 value of the first configuration information and the MD5 value of the second configuration information are different, the management apparatus determines that the first configuration information and the second configuration information are different.

It should be noted that, the foregoing determining, through full comparison and the MD5 algorithm, whether the first configuration information and the second configuration information are completely the same is only an example for description. Any method that can determine whether the first configuration information and the second configuration information are completely the same shall fall within the protection scope of embodiments of this application.

S203: When the management apparatus determines that the result of the verification of the consistency between the first configuration information and the second configuration information is a success, the management apparatus determines the first configuration information or the second configuration information as the target configuration information, and starts the server based on the target configuration information.

Optionally, when the management apparatus is the BMC of the server, the BMC sends the determined target configuration information to a BIOS of the server. Further, the BIOS of the server initializes the hardware resources of the server based on the obtained target configuration information, further guides an OS startup of the server, and eventually completes a startup of the server.

Optionally, when the management apparatus is a chip or an integrated circuit independent of the BMC of the server, the management apparatus sends the determined target configuration information to the BMC of the server. Then, the BIOS of the server obtains the target configuration information from the BIOS of the server, initializes the hardware resources of the server based on the target configuration information, further guides the OS startup of the server, and eventually completes the startup of the server.

S204: When the management apparatus determines that the result of the verification of the consistency between the first configuration information and the second configuration information is a failure, the management apparatus determines the first configuration information or the second configuration information as the target configuration information according to a first preset rule, and starts the server based on the target configuration information.

The first preset rule may also be referred to as a preset rule, and mainly includes at least one of the following manners.

In a first manner, the target configuration information is determined based on a version.

Specifically, the first manner is a manner in which configuration information of a higher version, either the first configuration information or the second configuration information, is determined as the target configuration information.

In an example, after the management apparatus determines that the result of the verification of the consistency between the first configuration information and the second configuration information is a failure, the management apparatus may further read version information that is in the first configuration information to determine a version of the first configuration information, and read version information that is in the second configuration information to determine a version of the second configuration information. Further, the management apparatus determines the configuration information of the higher version, either the first configuration information or the second configuration information, as the target configuration information. For detailed descriptions of the version information in the configuration information, refer to related descriptions of S102. Details are not described again.

In a second manner, the target configuration information is determined based on update time.

Specifically, the second manner is a manner in which configuration information including time information corresponding to update time that is of the first configuration information or the second configuration information and that is closer to a current moment is determined as the target configuration information. The update time of the first configuration information is time indicated by time information recorded during the latest obtaining of the first configuration information by the management apparatus, and the update time of the second configuration information is time indicated by time information recorded during the latest obtaining, of the first configuration information that is used to obtain the second configuration information, by the management apparatus.

In an example, after the management apparatus determines that the result of the verification of the consistency between the first configuration information and the second configuration information is a failure, the management apparatus further obtains the pre-recorded information about time at which the first configuration information is obtained, to determine time at which the first configuration information is obtained as first time, and obtain the update time of the second configuration information. Further, the management apparatus determines time, either the update time of the first configuration information or the update time of the second configuration information, that is closer to a current moment, and determines configuration information corresponding to the time as the target configuration information. For example, the management apparatus determines that the first time is later than the update time of the second configuration information. In other words, compared with the update time of the second configuration information, the first time is closer to the current moment. Therefore, the management apparatus determines the first configuration information corresponding to the first time as the target configuration information.

It can be learned that when the target configuration information is determined in the first manner and the second manner, configuration information corresponding to a latest updated product configuration of the server, either the first configuration information or the second configuration information, is determined as the target configuration information.

In a third manner, the target configuration information is determined based on a user indication.

Specifically, the third manner is a manner in which the target configuration information is determined from the first configuration information and the second configuration information based on the user indication.

In an example, after the management apparatus determines that the result of the verification of the consistency between the first configuration information and the second configuration information is a failure, the management apparatus further obtains indication information input by the user (for example, indication information input by the user through an input interface (for example, a keyboard) of the server in which the management apparatus is located). Then, the management apparatus determines configuration information indicated by the indication information as the target configuration information. The configuration information indicated by the indication information is either the first configuration information or the second configuration information.

Further, after the management apparatus determines the target configuration information, the management apparatus starts the server based on the target configuration information. For a specific process, refer to descriptions of S203. Details are not described again.

S205 (optional): The management apparatus updates configuration information, either the first configuration information or the second configuration information, that is different from the target configuration information to the target configuration information.

It may be understood that, the configuration information, either the first configuration information or the second configuration information, that is different from the target configuration information is updated to the target configuration information, so that an objective can be achieved in which the configuration information that is stored in the BMC or mainboard of the server and that is different from the target configuration information is restored to the target configuration information. In this way, when the management apparatus determines the target configuration information according to the first preset rule in S204, if the management apparatus performs S205 to restore the configuration information that is stored in the BMC or mainboard of the server and that is different from the target configuration information to the target configuration information, verification of the consistency between the first configuration information and the second configuration information can succeed when the server is started next time and the product configuration of the server is not updated by then. In this way, computing resources needed when the server is started next time can be saved. In addition, the management apparatus may determine, without a need to obtain the user indication again, configuration information specified by the user when the server is started this time as the target configuration information that is when the server is started next time. It can be learned that, in this solution, user operations can be reduced, and user experience can be improved.

In some examples, when the management apparatus determines the first configuration information as the target configuration information, the management apparatus indicates the mainboard of the server to update the second configuration information stored in the non-volatile storage medium disposed on the mainboard to the first configuration information. Optionally, when the management apparatus is the BMC, the BMC may write, through the communication interface of the BMC, the first configuration information stored in the non-volatile storage medium of the BMC into the non-volatile storage medium disposed on the mainboard, to overwrite the second configuration information originally stored in the non-volatile storage medium. Optionally, when the management apparatus is not the BMC, the management apparatus may write the first configuration information obtained in S201 into the non-volatile storage medium disposed on the mainboard, to overwrite the second configuration information originally stored in the non-volatile storage medium.

In some other examples, when the management apparatus determines the second configuration information as the target configuration information, the management apparatus indicates the BMC to update the first configuration information stored in the non-volatile storage medium of the BMC to the second configuration information. Optionally, when the management apparatus is the BMC, the BMC may use the second configuration information obtained in S201 to overwrite the first configuration information stored in the non-volatile storage medium of the BMC. Optionally, when the management apparatus is not the BMC, the management apparatus may write the second configuration information obtained in S201 into the non-volatile storage medium of the BMC, to overwrite the first configuration information originally stored in the non-volatile storage medium.

According to the method in the foregoing S201 to S205, the configuration information that indicates the product configuration of the server is pre-stored in both the BMC and mainboard of the conventional server (for example, pre-stored according to the method in S101 and S102). In this way, in the startup phase after the server is powered on, only the consistency between the configuration information stored in the BMC and the configuration information stored in the mainboard needs to be verified, and the target configuration information is determined, based on the consistency verification result, from the configuration information stored in the BMC and the configuration information stored in the mainboard. Further, the server can be normally started based on the target configuration information. Therefore, when either of the BMC and the mainboard of the conventional server is replaced, according to the method provided in embodiments of this application, a problem can be avoided in which the server cannot be normally started (or the performance is low after the server is started) because the BMC of the server cannot obtain the configuration information of the server or obtains incorrect configuration information of the server.

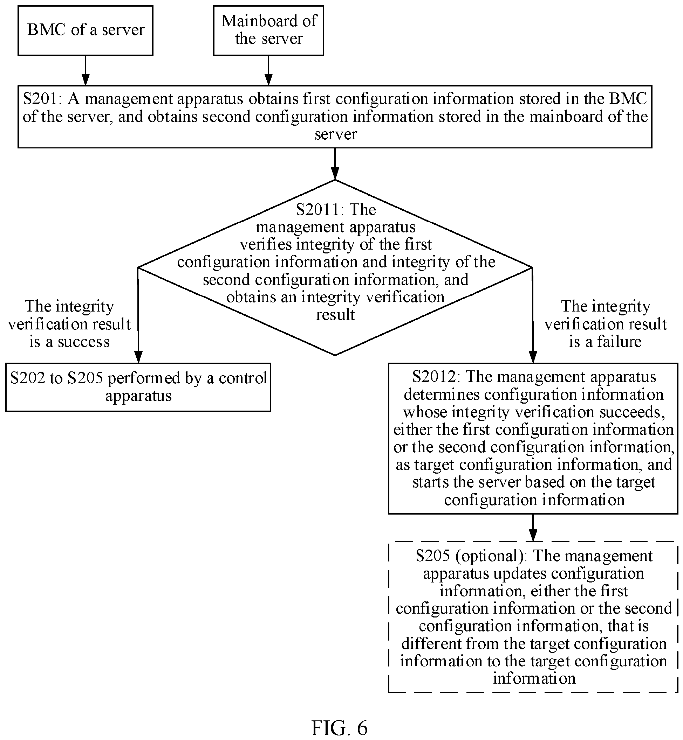

In some possible implementations, in order to ensure security of the configuration information pre-stored in the BMC and mainboard of the conventional server, before the foregoing S202, according to the configuration information management method provided in embodiments of this application, integrity verification may further be performed on the configuration information stored in the BMC and mainboard of the conventional server. Specifically, FIG. 6 is a schematic flowchart of still another configuration information management method according to an embodiment of this application. For example, the method may be performed by a management apparatus having the hardware structure shown in FIG. 3. After the management apparatus performs S201, the management apparatus performs the following steps.

S2011: The management apparatus verifies integrity of the first configuration information and integrity of the second configuration information, and obtains an integrity verification result.

It should be understood that the first configuration information pre-stored in the BMC and the second configuration information pre-stored in the mainboard of the server may be illegally modified, for example, may be maliciously modified by a network attacker or may be modified by an unauthorized user. Alternatively, it may be understood that, except an update or a modification of the configuration information when the server normally updates the product configuration (for example, performs capacity expansion), all modifications (for example, tampering content of the configuration information that is normally updated or deleting data in the configuration information that is normally updated) to the first configuration information pre-stored in the BMC and the second configuration information pre-stored in the mainboard of the server are considered as illegal modifications. On this basis, in the startup phase of the server, the management apparatus may verify the integrity of the first configuration information stored in the BMC and the integrity of the second configuration information stored in the mainboard of the server.

Specifically, when the management apparatus determines that the first configuration information is not illegally modified, the integrity verification of the first configuration information succeeds. When the management apparatus determines that the first configuration information is illegally modified, the integrity verification of the first configuration information fails. Similarly, when the management apparatus determines that the second configuration information is not illegally modified, the integrity verification of the second configuration information succeeds. When the management apparatus determines that the second configuration information is illegally modified, the integrity verification of the second configuration information fails.

Optionally, the management apparatus may separately determine, by using a digital signature technology, whether the first configuration information or the second configuration information is illegally modified, so that integrity verification of the first configuration information and integrity verification of the second configuration information are separately implemented.

For example, the integrity of the first configuration information is verified by using the digital signature technology. A digital signature is attached to the first configuration information, which means that an encryption end encrypts digest information of the first configuration information via a private key. A decryption end uses a public key of the encryption end to decrypt the encrypted digest information. In addition, the decryption end generates digest information of the first configuration information by using a hash (hash) algorithm. Further, the decryption end compares whether digest information obtained through decrypting by using the public key and the digest information generated by using the hash algorithm is the same. If the decryption end determines that the digest information obtained through decrypting by using the public key and the digest information generated by using the hash algorithm are the same, it may be determined that the first configuration information is not illegally modified, in other words, the integrity verification of the first configuration information succeeds. If the decryption end determines that the digest information obtained through decrypting by using the public key and the digest information generated by using the hash algorithm are different, it may be determined that the first configuration information is illegally modified, in other words, the integrity verification of the first configuration information fails. The hash algorithm used to generate the digest information of the configuration information is not specifically limited in embodiments of this application.

It should be noted that the method for verifying the integrity of the first configuration information and the integrity of the second configuration information by using the digital signature technology is only an example for description. Any method that can verify the integrity of the first configuration information and the integrity of the second configuration information shall fall within the protection scope of embodiments of this application.

Further, when the management apparatus determines that the verification of the integrity of the first configuration information and the verification of the integrity of the second configuration information both succeed, it indicates that the integrity verification result of the first configuration information and the second configuration information is a success. In this case, the management apparatus performs the foregoing S202 to S205. Details are not described again.

When the management apparatus determines that the integrity verification of either of the first configuration information and the second configuration information fails (for example, the integrity verification of the first configuration information fails, or the integrity verification of the second configuration information fails), it indicates that the integrity verification result of the first configuration information and the second configuration information is a failure. In this case, the management apparatus performs S2012.

When the management apparatus determines that the integrity verification of the first configuration information and the integrity verification of the second configuration information both fail, it indicates that the configuration information stored in the BMC and the configuration information stored in the mainboard of the server are both illegally modified. In this case, the management apparatus may output alarm information to prompt a user to input configuration information of the server to the management apparatus again. Further, the management apparatus may perform the method in S102 again to perform the backup operation on the obtained configuration information. Details are not described again.

S2012: The management apparatus determines configuration information whose integrity verification succeeds, either the first configuration information or the second configuration information, as the target configuration information, and starts the server based on the target configuration information.

In an example, when the management apparatus determines that the integrity verification of the first configuration information succeeds, but the integrity verification of the second configuration information fails, the management apparatus determines the first configuration information as the target configuration information.

In another example, when the management apparatus determines that the integrity verification of the second configuration information succeeds, but the integrity verification of the first configuration information fails, the management apparatus determines the second configuration information as the target configuration information.

Specifically, for detailed descriptions of a case in which the management apparatus starts the server based on the target configuration information, refer to the descriptions of S203. Details are not described again.

Optionally, in some implementations, the management apparatus may further perform S205. Details are not described again.

According to the method in FIG. 6, the management apparatus further performs the integrity verification of the first configuration information and the second configuration information pre-stored in the BMC and mainboard of the conventional server, to avoid a problem in which the server cannot be normally started (or performance is low after the server is started) because the BIOS obtains incorrect configuration information (which is compared with configuration information that indicates a real product configuration of the server) from the BMC after the configuration information pre-stored in the BMC or mainboard of the conventional server is illegally modified.

The foregoing describes in detail the method applied to an infrastructure of the conventional server according to this embodiment of this application with reference to the accompanying drawings. The following further explains a configuration information management method applied to, for example, a server of a new infrastructure according to an embodiment of this application.

In a possible implementation, the method according to this application is also applicable to the server of the new infrastructure, and the server has an innovative peer-to-peer interconnected infrastructure (which may also be referred to as a new server infrastructure or a new infrastructure). In this infrastructure, a conventional mainboard is divided into a basic computing unit (basic computing unit, BCU) and an extension unit (extension unit, EXU). The basic computing unit, the extension unit, and a functional component cooperate to support specifications and forms of mainboards needed in different scenarios.

In addition, a same computing device may include one basic computing unit and one extension unit, or a same computing device may include a plurality of basic computing units and one extension unit, or a same computing device may include one basic computing unit and a plurality of extension units. The basic computing unit includes a CPU, a double data rate (double data rate, DDR), and a related power source, to provide a general-purpose computing capability and peripheral extension interfaces like a storage interface, an I/O interface, and an acceleration interface. Basic computing units support CPUs of different series, such as Kunpeng^{®}, Intel^{®}, and AMD^{®}. Optionally, the basic computing unit supports heterogeneous processors. To be specific, the basic computing unit may support different types of processors. For example, the basic computing unit supports any processor such as a CPU, an application-specific integrated circuit (application-specific integrated circuit, ASIC), a programmable logic device (programmable logic device, PLD), a complex programmable logical device (complex programmable logical device, CPLD), a field-programmable gate array (field-programmable gate array, FPGA), a generic array logic (generic array logic, GAL), a system-on-a-chip (system-on-a-chip, SoC), a data processing unit (data processing unit, DPU), a software-defined infrastructure (software-defined infrastructure, SDI) chip, or an artificial intelligence (artificial intelligence, AI) chip, or any combination thereof.

Further, based on a service requirement and a hardware property, at least six basic computing units in different forms are provided in embodiments of this application, and are respectively designed for different computing performance and memory configurations. For ease of description, the six basic computing units are respectively referred to as A1, A2, B1, B2, C1, and C2. In addition, in this embodiment, "P" indicates a quantity of processors, where P is an integer greater than 0. "DPC" indicates a dual in-line memory module per channel (dual in-line memory module per channel, DIMM Per Channel). For example, a basic computing unit in an A1 form supports one processor, and each channel is inserted with one DIMM (1P1DPC for short). A basic computing unit in an A2 form supports one processor, and each channel is inserted with one or two DIMMs (1P1DPC or 1P2DPC for short). A basic computing unit in a B1 form supports two processors, and each channel is inserted with one DIMM (2P1DPC for short); or supports one processor, and each channel is inserted with one or two DIMMs (1P1DPC or 1P2DPC for short). A basic computing unit in a B2 form supports two processors, and each channel is inserted with one or two DIMMs (2P1DPC or 2P2DPC for short); or supports one processor, and each channel is inserted with one or two DIMMs (1P1DPC or 1P2DPC for short). A basic computing unit in a C1 form supports four processors, and each channel is inserted with one DIMM (4P1DPC for short); or supports two processors, and each channel is inserted with one or two DIMMs (2P1DPC or 2P2DPC for short). A basic computing unit in a C2 form supports four processors, and each channel is inserted with one or two DIMMs (4P1DPC or 4P2DPC for short); or supports two processors, and each channel is inserted with one or two DIMMs (2P1DPC or 2P2DPC for short). With the development of technologies, a CPU package size, a memory channel, and a quantity of DIMMs may change, but a standard size and a mounting hole of the mainboard remain unchanged. This ensures cross-generation and cross-series compatibility evolution of the basic computing unit during an upgrade. For example, the basic computing unit in the B2 form supports the 2P2DPC (2P32DIMM) when each CPU currently has eight-channel DDR. After a quantity of CPU memory channels is increased to 12, the 2P2DPC (2P48DIMM) cannot be implemented. In this case, the B2 form may support the 2P1DPC (2P24DIMM), and the 2P2DPC (the 2P48DIMM) may be implemented by another form such as C1. Direct replacement and installation can be performed because the position of the mounting hole and the size of the basic computing unit are standard.

The extension unit includes a BMC and at least one of a management system, and a bridge chip (for example, a platform controller hub (Platform Controller Hub, PCH) of an Intel system). The extension unit is extension of the basic computing unit, and is configured to extend a management interface of the basic computing unit, to provide management functions in terms of device, security, energy efficiency, reliability, and the like.

In the new infrastructure, the extension unit implements communication and connection and is interconnected with the functional component in the server through a high-speed bus such as a peripheral component interconnect express (peripheral component interconnect express, PCIe) bus, a compute express link (Compute Express Link, CXL), or a unified bus (unified bus, UB, or Ubus). During specific implementation, specific manners of a connection between the foregoing extension unit and the functional component in the server, and a connection between the basic computing unit and the extension unit include: a soft connection manner in which the foregoing connections are implemented through a cable, or a hard connection manner in which the foregoing connections are implemented through a connector.

Further, a component is a general name of a type of assemblies or devices. The functional component in the foregoing server may include a storage unit (storage unit, STU), an I/O unit (input/output unit, IOU), an acceleration unit (acceleration unit, ACU), a memory expansion unit (memory expansion unit, MEU), a heat dissipation component, a power supply component, a computing component, a management component, and the like based on a function that is implemented. It may be understood that the basic computing unit and the extension unit may also be referred to as components of the server.

The storage unit, including a hard disk backplane, an extension unit (Expander), and a PCIe switch (switch), is for system storage expansion, and supports a plurality of media and forms, for example, a hard disk drive (hard disk drive, HDD)/solid-state drive (solid-state drive, SSD)/non-volatile memory express (non-volatile memory express, NVMe)/storage class memory (storage class memory, SCM). The I/O unit, including a riser and the like, implements system I/O expansion, and supports a standard PCIe card and an open compute project (open compute project, OCP) card. The acceleration unit, including a riser, a carrier board, and an acceleration card interconnection switch (switch), provides acceleration unit expansion and interconnection functions for a system. The memory expansion unit, including the carrier board, a memory expansion chip, the dual in-line memory module (dual in-line memory module, DIMM), and an SCM medium, provides memory bandwidth expansion and content capacity expansion functions for the system. The heat dissipation component is configured to dissipate heat for a computing device or hardware in the computing device in one or both of the following heat dissipation manners: air cooling, and liquid cooling. It should be understood that a structure and type of the heat dissipation component and a quantity of heat dissipation components do not constitute a limitation on the technical solution to be protected in this application. The power supply component is configured to supply power to another component. The computing component is an assembly that provides a general-purpose computing capability, including the CPU and a memory.

The management component is an assembly that provides device management, including a baseboard management controller.

In addition, to support diverse computing power and devices, the new server infrastructure also implements hardware standardization, including standardization of the basic computing unit and standardization of other component interfaces that are mentioned above.

The standardization of the basic computing unit includes standardization of the size, the mounting hole, an electrical characteristic of an interface, a management interface protocol, a parameter, and the like. Table 1 is an example of a basic computing unit interface description table according to this application.

**Table 1**

| Interface name | Interface type | Function description |
|---|---|---|
| Power supply interface | 12 V | Functions as a 12 V main input power source of a basic computing unit. |
| High-speed interface | PCIe/Flexible input/output (Flexible I/O) | Functions as a high-speed I/O interface of a CPU that is on the basic computing unit. The high-speed interface uses a UBC (x8) connector or a UBC-DD (x16) connector. |
| | | Flexible I/O: Some CPUs support a case in which a part of high-speed interfaces is flexibly configured as a Huawei cache coherence system (Huawei Cache Coherence System, HCCS) interface/a serial attached small computer system interface (Serial Attached Small Computer System Interface, SAS)/a serial advanced technology attachment (Serial Advanced Technology Attachment, SATA) interface/an Ethernet interface. |
| BCU management interface | (1) High speed input/output interface, including a high speed serial port (high speed serial port, Hisport); | Functions as a low-speed I/O interface, of the basic computing unit, configured to: manage the basic computing unit, and implement interconnection and communication between the basic computing unit and an extension unit. It is defined that the management interface is compatible with a plurality of platforms, including Kunpeng/Feiteng^{®}/AMD^{®}/Intel^{®}, and the like. |
| | (2) Inter-integrated circuit (Inter-Integrated Circuit, IIC, or I2C); | |
| | (3) Universal asynchronous receiver/transmitter (Universal Asynchronous Receiver/Transmitter, UART); | |
| Interface name | Interface type | Function description |
| | (4) Joint test action group (Joint Test Action Group, JTAG); | |
| | (5) Low pin count bus (Low pin count Bus, LPC); | |
| | (6) Serial peripheral interface (Serial Peripheral Interface, SPI); | |
| | (7) Universal serial bus (Universal Serial Bus, USB); | |
| | (8) Direct media interface (Direct Media Interface, DMI)/PCIe; | |
| | (9) Network controller sideband interface (Network Controller Sideband Interface, NCSI); | |
| | (10) 3.3 V standby power source (STBY 3V3); and MISC | |

A unified input power of 12 V is used for power supply, and is converted into various types of needed power sources through DC/DC conversion inside the basic computing unit. Considering I/O evolution in the future and differentiation of different CPUs, the flexible I/O interface is defined based on the UBC connector and the UBCDD connector in this embodiment, and is configured to replace the original PCIe interface. The flexible I/O interface may be flexibly configured as the PCIe/HCCS/SAS/SATA/Ethernet interface based on a requirement. The BCU management interface includes a common low-speed maintenance interface, such as I2C, UART, or JTAG, and is compatible with management of a common processor platform.

The standardization of the other component interfaces that are mentioned above are for the extension unit, the power supply component, the heat dissipation component, the storage unit, the I/O unit, the acceleration unit, the memory expansion unit, and the like. Electrical interfaces, management interfaces, and parameters of the components are standardized, but physical sizes, installation, and positions of the components are neither defined nor constrained. These facilitate innovation, and support differentiation and flexible expansion. Definitions of low-speed management interfaces, namely, external interfaces of components except a power source interface and a high-speed signal interface, are defined in Table 2 (Table 2 is an example of a definition table of low-speed management interfaces of components according to this application).

**Table 2**

| Interface name | Interface type | Function description |
|---|---|---|
| EXU-BCU management interface | HiSPort, I2C, UART, JTAG, LPC, SPI, USB, DMI/PCIe, NCSI, STBY 3V3, and MISC | Interconnects with a basic computing unit and functions as a low-speed I/O interface, of the basic computing unit, configured to: manage the basic computing unit, and implement interconnection and communication between the basic computing unit and the extension unit. It is defined that the management interface is compatible with a plurality of platforms, including x86/Kunpeng, and the like. |
| STU/IOU management interface | I2C, JTAG, and STBY 3V3 | Functions as a management interface of the storage unit or the I/O unit. |
| BMC external interface | Gigabit Ethernet (Gigabit Ethernet, GE), video graphics array (Video Graphics Array, VGA), universal serial bus (Universal Serial Bus, USB), universal | Functions as an external interface of a BMC management unit. |
| | asynchronous receiver/transmitter (Universal Asynchronous Receiver/Transmitter, UART), power button (Power button, PWR BTN), and unit identification light button (unit identification light button, UID BTN) | |

Except for interfaces of the EXU and the BCU, other interfaces are connected to components through the EXU. It should be noted that only functions of these interfaces are defined in this embodiment, and a specific manner of pin layout (PINMAP) is not limited herein. Any implementation that can implement the functions shall fall within the protection scope of embodiments.

It should be noted that content of Table 1 and Table 2 is only an example for assistance in explaining the technical solutions of this application. During specific implementation, the new server infrastructure, the interface of the basic computing unit, and the low-speed interfaces of other components mentioned above may separately include more or less content.

In addition, in the new server infrastructure, intelligent management software is further provided, and a template of a to-be managed object is implemented based on a standardization requirement of the new server infrastructure. After the server is powered on, the management software automatically detects a component through a standard management bus and obtains self-description information of a component. Then, the management software creates an instance of the to-be-managed object based on the template of the to-be-managed object. This implements self-adaptive management of the management software, implements intelligentization of the management software, and supports automatic component detection and adaptation.

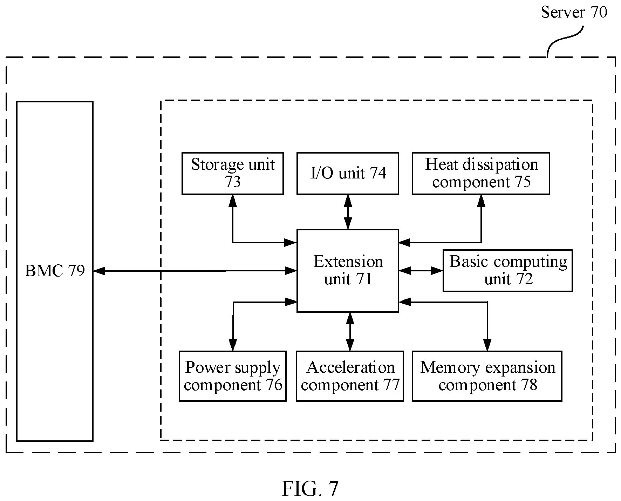

In an example, FIG. 7 is a diagram of an infrastructure of a server of a new infrastructure. As shown in FIG. 7, a server 70 includes a plurality of components: an extension unit 71, a basic computing unit 72, a storage unit 73, an I/O unit 74, a heat dissipation component 75, a power supply component 76, an acceleration unit 77, a memory expansion unit 78, and a BMC 79. In addition, the basic computing unit 72, the storage unit 73, the I/O unit 74, the heat dissipation component 75, the power supply component 76, the acceleration unit 77, and the memory expansion unit 78 are separately interconnected with the extension unit 71, and the BMC 79 is interconnected with the extension unit 72. Functions jointly implemented by the extension unit 71, the basic computing unit 72, the storage unit 73, the I/O unit 74, the heat dissipation component 75, the power supply component 76, the acceleration unit 77, and the memory expansion unit 78 are the same as functions of a conventional server.

With reference to the accompanying drawings, based on the foregoing server of the new infrastructure, the following describes a configuration information management method according to an embodiment of this application by using an example in which the server includes a plurality of components. The components include the foregoing basic computing unit, the extension unit, and/or the functional component. For detailed descriptions of the configuration information of the server, refer to related descriptions of the configuration information in S101. Details are not described again.

First, the management apparatus performs S101 and S102, so that the configuration information of the server is pre-stored in the BMC and at least one of the components in the server of the new infrastructure.

It should be noted that, in S102, when the server is the server of the new infrastructure, after the management apparatus performs the backup operation on the obtained configuration information of the server, the copy data of the configuration information may be backed up in the storage space, in addition to the BMC, of the at least one component in the server of the new infrastructure (for example, in a non-volatile storage medium disposed in the component). The storage space of the at least one component is storage space that is of the server and that is accessible to the BMC. For detailed descriptions of a case in which the management apparatus backs up the obtained configuration information in the storage space of the at least one component in the server of the new infrastructure, refer to descriptions of a case in which the management apparatus backs up the obtained configuration information in the mainboard in S102, and details are not described again.

In some examples, the management apparatus backs up the obtained copy data of the configuration information in storage space, in addition to the BMC, of some components in the server of the new infrastructure. In other words, a non-volatile storage medium of each of the some components in the server of the new infrastructure stores the configuration information backed up by the management apparatus.

In some other examples, the management apparatus backs up the obtained copy data of the configuration information in storage space, in addition to the BMC, of each component in the server of the new infrastructure. In other words, a non-volatile storage medium of each component in the server of the new infrastructure stores the configuration information backed up by the management apparatus.

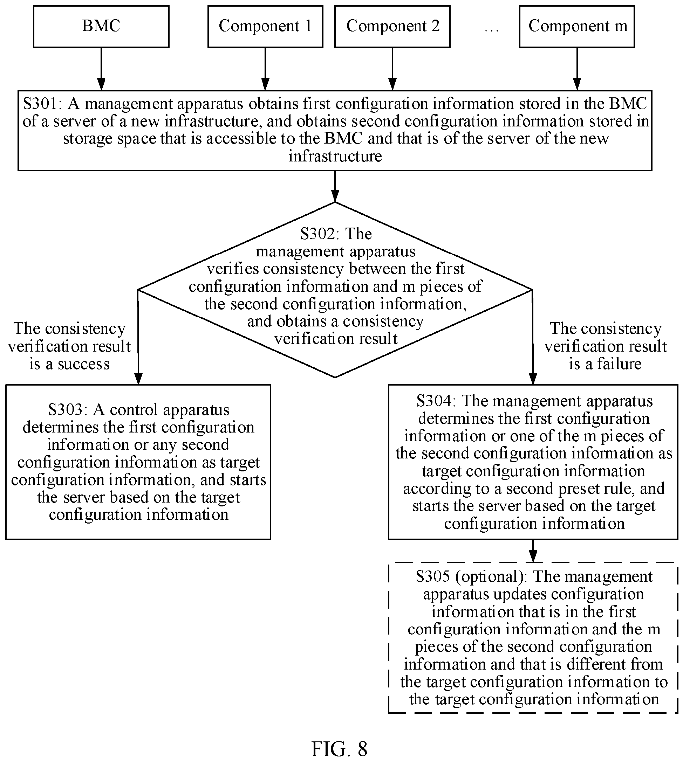

FIG. 8 is a schematic flowchart of still another configuration information management method according to an embodiment of this application. For example, the method may be performed by a management apparatus having the hardware structure shown in FIG. 3. The method includes the following steps.

S301: The management apparatus obtains first configuration information stored in a BMC of a server of a new infrastructure, and obtains second configuration information stored in storage space that is accessible to the BMC and that is of the server of the new infrastructure.

In a possible case, the storage space accessible to the BMC is a non-volatile storage medium of a component in the server of the new infrastructure. For a process of a case in which the management apparatus starts the server by performing integrity verification and consistency verification, and determining target configuration information, based on the obtained first configuration information and the second configuration information stored in the component, refer to the method described in S201 to S205. Details are not described again.

The component that stores the second configuration information and that is in the server of the new infrastructure may be a basic computing unit, an extension unit, or any functional component in the server of the new infrastructure, and this is not limited in embodiments of this application.

In another possible case, the storage space accessible to the BMC includes a non-volatile storage medium of each of m components in the server of the new infrastructure. In other words, in this case, each of the m components stores the second configuration information. m is an integer greater than 1, and m is less than or equal to a quantity of all components included in the server of the new infrastructure.

As shown in FIG. 8, the m components in the server of the new infrastructure are respectively a component 1, a component 2, ..., a component m. Each of the m components stores the second configuration information. Configuration information stored in each component is referred to as the second configuration information. Second configuration information in different components may be same configuration information, or may be different configuration information. This is not limited herein. It may be understood that, for example, the server of the new infrastructure is a server 1. When a specific component in the server 1 is replaced (for example, during maintenance) with a component in another server, configuration information stored in the component for replacement is different from configuration information stored in another component in the server 1.

For detailed descriptions of a case in which the management apparatus obtains the first configuration information stored in the BMC of the server and obtains the second configuration information stored in each of the m components, refer to descriptions of S201. Details are not described again.

S302: The management apparatus verifies consistency between the first configuration information and m pieces of the second configuration information, and obtains a consistency verification result.

Specifically, the management apparatus determines whether the first configuration information and the m pieces of the second configuration information are completely the same, to verify the consistency between the first configuration information and the m pieces of the second configuration information, and obtain the consistency verification result.

When the management apparatus determines that the first configuration information and the m pieces of the second configuration information are completely the same, it indicates that the result of the verification of the consistency between the first configuration information and the m pieces of the second configuration information is a success. In this case, the management apparatus performs S303. When the management apparatus determines that the first configuration information and the m pieces of the second configuration information are different, it indicates that the result of the verification of the consistency between the first configuration information and the m pieces of the second configuration information is a failure. In this case, the management apparatus performs S304.

For specific descriptions of a case in which the management apparatus determines whether the first configuration information and the m pieces of the second configuration information are completely the same, refer to descriptions of a case in which the management apparatus determines whether the first configuration information and the second configuration information are completely the same in S202. Details are not described again.

S303: When the management apparatus determines that the result of the verification of the consistency between the first configuration information and the m pieces of the second configuration information is a success, the management apparatus determines the first configuration information or any second configuration information as the target configuration information, and starts the server based on the target configuration information.

For detailed descriptions of S303, refer to descriptions of S203. Details are not described again.

S304: When the management apparatus determines that the result of the verification of the consistency between the first configuration information and the m pieces of the second configuration information is a failure, the management apparatus determines the first configuration information or one of the m pieces of the second configuration information as the target configuration information according to a second preset rule, and starts the server based on the target configuration information.

The second preset rule mainly includes at least one of the following manners.

In a third manner, the target configuration information is determined based on a user indication. For detailed descriptions of the third manner, refer to descriptions of the third manner in S204. Details are not described again.

In a fourth manner, the target configuration information is determined based on a version. Specifically, the fourth manner is a manner in which configuration information of the highest version, either the first configuration information or one of the m pieces of the second configuration information, is determined as the target configuration information.

In an example, after the management apparatus determines that the result of the verification of the consistency between the first configuration information and the m pieces of the second configuration information is a failure, the management apparatus may further read version information that is in the first configuration information to determine a version of the first configuration information, and read version information that is in each of the m pieces of the second configuration information to determine a version of each piece of the second configuration information. Further, the management apparatus determines the configuration information of the highest version, either the first configuration information or one of the m pieces of the second configuration information, as the target configuration information.

In a fifth manner, the target configuration information is determined based on update time. Specifically, the fifth manner is a manner in which configuration information including time information corresponding to update time that is of the first configuration information or one of the m pieces of the second configuration information and that is closer to a current moment is determined as the target configuration information. The update time of the first configuration information is time indicated by time information recorded during the latest obtaining of the first configuration information by the management apparatus. For any one of the m pieces of the second configuration information, the update time of the piece of the second configuration information is time indicated by time information recorded during the latest obtaining, of the piece of the first configuration information that is used to obtain the second configuration information, by the management apparatus.

In an example, after the management apparatus determines that the result of the verification of the consistency between the first configuration information and the m pieces of the second configuration information is a failure, the management apparatus further obtains pre-recorded information about time at which the first configuration information is obtained, to determine time at which the first configuration information is obtained as first time, and obtains update time of each piece of the second configuration information. Further, the management apparatus determines time, either the first time or the update time of each piece of the second configuration information, closer to the current moment, and determines configuration information corresponding to the time as the target configuration information. For example, the management apparatus determines that the first time is later than update time of the m pieces of the second configuration information. In other words, compared with the update time of the m pieces of the second configuration information, the first time is closer to the current moment. Therefore, the management apparatus determines the first configuration information corresponding to the first time as the target configuration information.

In a sixth manner, the target configuration information is determined based on a quantity of pieces of same-version configuration information.

Specifically, the sixth manner is a manner in which configuration information having the most pieces of same-version configuration information, either the first configuration information or one of the m pieces of the second configuration information, is determined as the target configuration information. For example, after the management apparatus determines that the result of the verification of the consistency between the first configuration information and the foregoing m pieces of the second configuration information is a failure, the management apparatus further reads version information that is in the first configuration information to determine a version of the first configuration information, and reads version information that is in each piece of the second configuration information to determine a version of each piece of the second configuration information. Further, the management apparatus determines the configuration information having the most pieces of same-version configuration information, either the first configuration information or the second configuration information, as the target configuration information.

In an example, a value of m is 2. After the management apparatus determines that the result of the verification of the consistency between the first configuration information and two pieces of the second configuration information (configuration information 1 and configuration information 2 respectively) is a failure, the management apparatus further reads version information that is in the first configuration information to determine a version of the first configuration information as a version 2; reads version information that is in the configuration information 1 to determine a version of the configuration information 1 as the version 2; and reads version information that is in the configuration information 2 to determine a version of the configuration information 2 as a version 3. In this case, the management apparatus determines that there is one piece of configuration information of the version 3 (namely, the configuration information 2), and there are two pieces of configuration information of the version 2 (namely, the first configuration information and the configuration information 1). Therefore, the management apparatus determines the first configuration information or the configuration information 1 as the target configuration information.

Further, after the management apparatus determines the target configuration information, the management apparatus starts the server based on the target configuration information. For a specific process, refer to descriptions of S203. Details are not described again.

S305 (optional): The management apparatus updates configuration information that is in the first configuration information and the m pieces of the second configuration information and that is different from the target configuration information to the target configuration information.

For specific descriptions of a case in which the management apparatus updates the configuration information that is in the first configuration information and the m pieces of the second configuration information and that is different from the target configuration information to the target configuration information, refer to the descriptions of S205. Details are not described again.

According to the method in the foregoing S301 to S305, the configuration information that indicates the product configuration of the server is pre-stored in the BMC and at least one component of the server of the new infrastructure. In this way, in a startup phase after the server is powered on, the target configuration information may be determined based on the result of the verification of the consistency between the configuration information stored in the BMC and the configuration information stored in the component. Further, the server can be normally started based on the target configuration information. Therefore, when either of the BMC of the server of the new infrastructure and another component of the server of the new infrastructure is replaced, according to the method provided in embodiments of this application, a problem can be avoided in which the server cannot be normally started (or performance is low after the server is started) because the BMC of the server cannot obtain the configuration information of the server or obtains incorrect configuration information of the server.

In some possible implementations, in order to ensure security of the configuration information pre-stored in the BMC and the at least one component of the server of the new infrastructure, before the foregoing S302, according to the configuration information management method provided in embodiments of this application, integrity verification may further be performed on the configuration information stored in the BMC and the at least one component of the server of the new infrastructure.

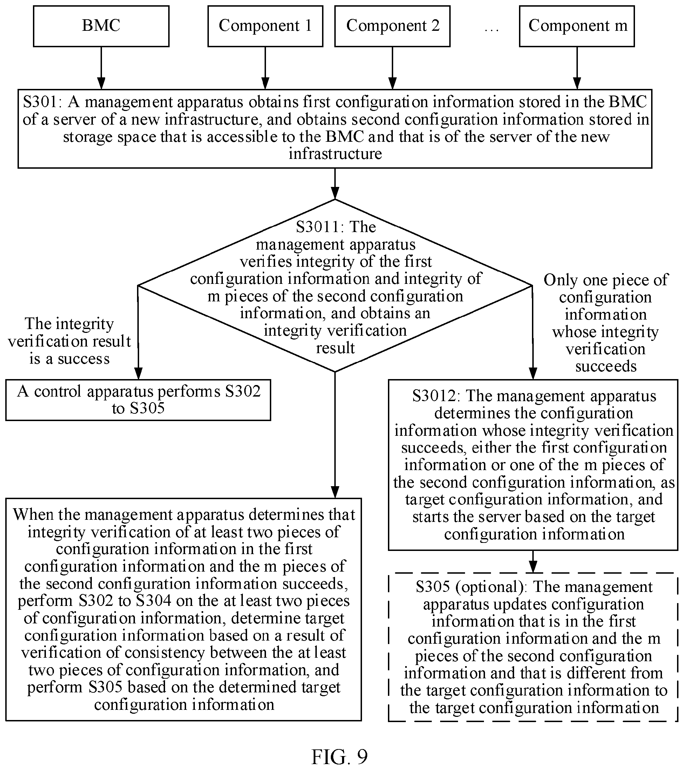

Specifically, FIG. 9 is a schematic flowchart of still another configuration information management method according to an embodiment of this application. For example, the method may be performed by a management apparatus having the hardware structure shown in FIG. 3. After a control apparatus performs the foregoing S301, the following steps are performed.

S3011: The management apparatus verifies integrity of first configuration information and integrity of m pieces of the second configuration information, and obtains an integrity verification result.

Specifically, the management apparatus separately performs integrity verification of the first configuration information and each of the m pieces of the second configuration information, to obtain the integrity verification result of the first configuration information and the m pieces of the second configuration information. For detailed descriptions of a case in which the management apparatus verifies each piece of configuration information, refer to the descriptions of verifying integrity of first product information in S2011. Details are not described again.

When the management apparatus separately determines that the integrity verification of the first configuration information and each of the m pieces of the second configuration information both succeeds, the management apparatus determines that the integrity verification result of the first configuration information and the m pieces of the second configuration information is a success. Further, the control apparatus performs S302 to S305.

When the management apparatus determines that integrity verification of at least two pieces of configuration information in the first configuration information and the m pieces of the second configuration information succeeds, the control apparatus performs S302 to S304 on the at least two pieces of configuration information, to perform verification of consistency between the at least two pieces of the configuration information, and determines the target configuration information based on a result of the verification of the consistency between the at least two pieces of the configuration information. Further, the control apparatus performs S305 based on the determined target configuration information. Details are not described again.

When the management apparatus determines that there is only one piece of configuration information whose integrity verification succeeds, either the first configuration information or one of the m pieces of the second configuration information, the control apparatus performs S3012.

When the control apparatus determines that the integrity verification of the first configuration information and each of the m pieces of the second configuration information both fails, it indicates that the configuration information stored in the BMC and the m components of the server of the new infrastructure are all illegally modified. In this case, the management apparatus may output alarm information to prompt a user to input configuration information of the server of the new infrastructure to the management apparatus again. Further, the management apparatus may perform the method in S102 again to perform the backup operation on the obtained configuration information. Details are not described again.

S3012: The control apparatus determines configuration information whose integrity verification succeeds, either the first configuration information or one of the m pieces of the second configuration information, as the target configuration information, and starts the server based on the target configuration information.

Specifically, for detailed descriptions of a case in which the control apparatus starts the server based on the target configuration information, refer to the descriptions of S203. Details are not described again.

Optionally, in some implementations, the control apparatus may further perform S305.

According to the method in FIG. 9, the management apparatus further performs the integrity verification of the configuration information pre-stored in the BMC of the server of the new infrastructure and the component of the server of the new infrastructure, to avoid a problem in which the server cannot be normally started (or performance is low after the server is started) because a BIOS obtains incorrect configuration information (compared with configuration information that indicates a real product configuration of the server) from the BMC after the configuration information pre-stored in the BMC and another component of the server of the new infrastructure is illegally modified.

For clearer and further description of the configuration information management method according to an embodiment of this application, the following describes the method according to this embodiment of this application at a logical level. For example, the method is applied to a server of a new infrastructure, and the management apparatus is a BMC of the server of the new infrastructure.

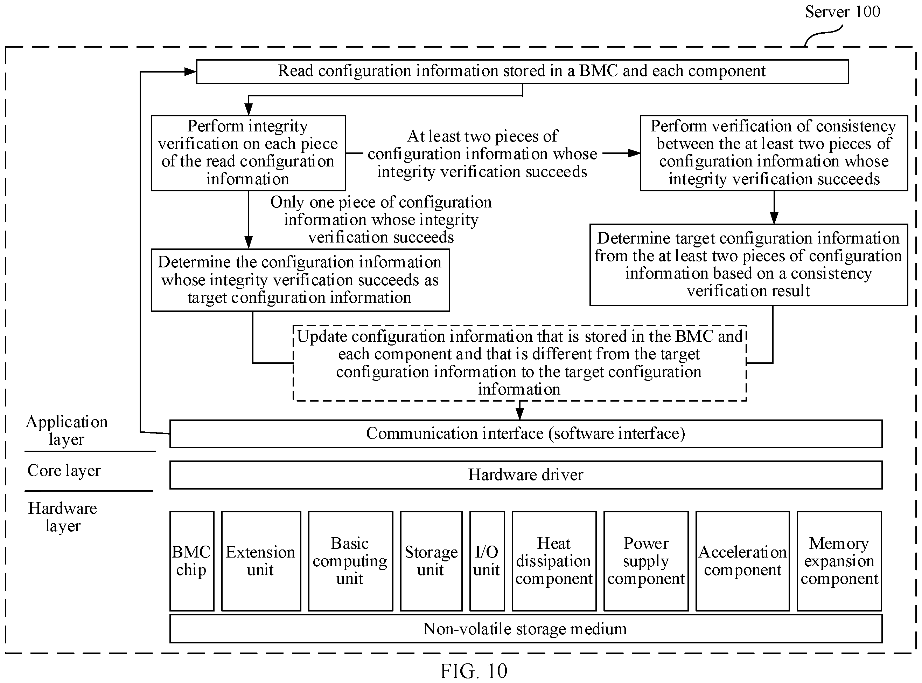

FIG. 10 is a logic diagram in which a configuration information management method provided in an embodiment of this application is applied to a server of a new infrastructure. As shown in FIG. 10, a hardware layer of a server 100 includes a plurality of components, for example, a BMC chip, an extension unit, a basic computing unit, a storage unit, an I/O unit, a heat dissipation component, a power supply component, an acceleration unit, and a memory expansion unit, and a storage medium. A core layer of the server 100 includes a hardware driver of the BMC chip, the extension unit, the basic computing unit, the storage unit, the I/O unit, the heat dissipation component, the power supply component, the acceleration unit, and the memory expansion unit. On an application layer of the server 100, a BMC performs the configuration information management method according to this embodiment of this application.

The BMC pre-obtains, through an input interface (for example, a keyboard) of the server 100, configuration information that is of the server 100 and that is input by a user (refer to S101), and backs up the obtained configuration information in each component for replacement according to the method in S102. For example, the BMC backs up the obtained configuration information in each component for replacement at a first moment after the BMC obtains the configuration information and before the server 100 is started this time.

In this way, when the server 100 is started this time, the BMC and each component of the server 100 both store the configuration information of the server 100. In a phase in which the server 100 is started this time, the BMC reads configuration information stored in the BMC, and reads, through a communication interface, configuration information stored in the extension unit, the basic computing unit, the storage unit, the I/O unit, the heat dissipation component, the power supply component, the acceleration unit, and the memory expansion unit (refer to S301). Then, the BMC performs integrity verification on each piece of the configuration information (refer to S3011). When there is only one piece of configuration information whose integrity verification succeeds among all pieces of the configuration information read by the BMC, the configuration information whose integrity verification succeeds is determined as target configuration information, and the server 100 is started based on the target configuration information (refer to S3012). When there are at least two pieces of configuration information whose integrity verification succeeds among all pieces of the configuration information read by the BMC, consistency verification is performed on the at least two pieces of configuration information. The target configuration information is determined from the at least two pieces of configuration information based on a consistency verification result, and the server 100 is started based on the target configuration information (refer to S302 to S304). Optionally, the BMC further updates configuration information that is stored in the BMC and each component and that is different from the target configuration information to the target configuration information (corresponding to S305).

In a possible implementation, the configuration information mentioned in the foregoing method embodiments includes at least one of component management self-description information (component self-description record, CSR) or product self-description information (product self-description record, PSR).

In an example, a storage format of the configuration information may be the following preset format, and the preset format may also be referred to as a hardware self-description record (Hardware Self-Description Record, HWSR) format. A component HWSR refers to static storage space of a component, and a start address of a fixed bus in the static storage space is 0xAE. A component HWSR format includes a header, an electronic label, component self-description information, extension information, and the like.

Table 3 shows an internal format of the component HWSR format.

**Table 3**

| Overall offset | Domain | Intra-domain offset | Subdomain | Subdomain offset | Segment | Segment meaning | Segment length (Bytes) |
|---|---|---|---|---|---|---|---|
| 0 | Eeprom Header EEPROM header | 0 | NA | NA | Specification code | Tianchi specification verification code (where only higher-order 4Byte "0xA55AA5 5A" are verified); and eeprom header intra-domain offset with reserved eight bytes for anti-tampering | 12 |
| | | 12 | NA | NA | Specification version (SPEC version) | Tianchi specification version, where a current version is 0x2 | 1 |
| | | 13 | NA | NA | Electronic label domain offset (Elable address available address) | Overall offset of an electronic label domain, with a byte length of 2 bytes Currently 2K bytes are reserved | 2 |
| | | 15 | NA | NA | OEM customized area 1System Information for the BMC to use | OEM customized area (product customizatio n information, and the like) Currently 1K byte is reserved | 2 |
| | | 17 | NA | NA | OEM customized area 2Internal use domain (Internal Use Area Address) | Overall offset of the internal use domain, with a byte length of 2 bytes | 2 |
| | | 19 | NA | NA | Product self-description record domain offset | Overall offset of a PSR (namely, a product self-description record) domain, with a byte length of 2 bytes | 2 |
| | | 21 | NA | NA | Component self-description record domain offset | Overall offset of a CSR (namely, a component self-description record) domain, with a byte length of 2 bytes | 2 |
| | | 23 | NA | NA | Data signature area offset | HWSR signature information overall offset | 2 |
| | | 25 | NA | NA | Reserved data (specificatio n reservation) | Reserved data | 73 |
| | | 98 | NA | NA | Hardware self-description record version (Hardware Self-Description Record version) | A.B format in which A is a higher-order byte and B is a lower-order byte | 2 |
| | | 100 | NA | NA | ComponentU niqueID (Component UID) component unique identifier | Component unique identifier with a character format (non-character-string) forming rule: 8-byte vendor code + 2-byte component type + 14-byte component ID | 24 |
| | | 124 | NA | NA | Header verification code (Verification Code) | Integrity verification CRC 32 | 4 |
| ... | ... | ... | ... | ... | ... | ... | ... |
| Elable | Elable | 0 | NA | NA | Electronic label content | Electronic label content, with a fixed size of 2K bytes, and necessary | Ne |
| ... | ... | ... | ... | ... | ... | ... | ... |
| System Informat ion System informat ion | System | 0 | NA | NA | System domain content | System domain content (customized information) OEM 1 information, with a fixed size of 1K byte, and need-to-be-reserved | Ne |
| ... | ... | ... | ... | ... | ... | ... | ... |
| Internal Use Area Address Internal use area address | Internal Use Area Internal use area | 0 | NA | NA | Customized data | OEM2 | NA |
| ... | ... | ... | ... | ... | ... | ... | ... |
| Product Descript ion Record Address Product descripti on record address | PSR | 0 | PSR Header PSR header | 0 | PSR domain format version | Format version used in the PSR domain, currently 0x01 | 1 |
| | | | | 1 | Quantity of PSR subdomains [Npsr] | Value range: 1 | 1 |
| | | | | 2 | PSR subdomain 1 offset (PSR1 offset) | Intra-domain offset in a subdomain, with a byte length of 2 bytes | 2 |
| | | | | 4 | Reserved data | Reserved data, with a padding of 00 | 8 |
| | | | | 12 | Verification code | Integrity verification (PSR Header subdomain verification) CRC32 | 4 |
| | | ... | ... | ... | ... | ... | ... |
| | | PSR offset PSR offset | PSR | 0 | PSR verification code | Subdomain integrity verification (PSR subdomain verification) sha256, for integrity verification to determine whether the verification code is changed | 32 |
| | | | | 32 | PSR data format | Supporting xml, json, and multirecord xml = 0 json = 1 (implemente d) multirecord = 2 | 1 |
| | | | | 33 | PSR data compression algorithm | Supporting gzip, bzip2 gzip = 0 (implemente d) bzip2 = 1 | 1 |
| | | | | 34 | PSR data length N1 | Data length (excluding the header), with a byte length of 2 bytes | 2 |
| | | | | 36 | Padding | 8-byte padding (with a padding of data 00) | 4 |
| | | | | 40 | PSR data | Length N1 evenly divided by 8, or padded with 00 until the length is evenly divided by 8 | N1 |
| ... | ... | ... | ... | ... | ... | ... | ... |
| Compon ent Descript ion Record Address Compon ent descripti on record address | CSR | 0 | CSR Header CSR header | 0 | CSR domain format version | Format version used in the CSR domain, currently 0x01 | 1 |
| | | | | 1 | Quantity of CSR subdomains [Ncsr] | Value range: 1-4 | 1 |
| | | | | 2 | CSR1 subdomain offset (CSR1 offset) | Intra-domain offset in a subdomain, with a byte length of 2 bytes, where at most 4 subdomain address spaces are fixedly reserved, with a padding of 00 in an invalid address | 2 |
| | | | | 4 | CSR2 subdomain offset (CSR2 offset) | Intra-domain offset in a subdomain, with a byte length of 2 bytes, where at most 4 subdomain address spaces are fixedly reserved, with a padding of 00 in an invalid address | 2 |
| | | | | 6 | CSR3 subdomain offset (CSR3 offset) | Intra-domain offset in a subdomain, with a byte length of 2 bytes, where at most 4 subdomain address spaces are fixedly reserved, with a padding of 00 in an invalid address | 2 |
| | | | | 8 | CSR4 subdomain offset (CSR4 offset) | Intra-domain offset in a subdomain, with a byte length of 2 bytes, where at most 4 subdomain address spaces are fixedly reserved, with a padding of 00 in an invalid address | 2 |
| | | | | 10 | Padding | 8-byte padding (with a padding of data 00) | 2 |
| | | | | 12 | Verification code | Integrity verification (CSR Header subdomain verification) CRC32 | 4 |
| | | ... | ... | ... | ... | ... | ... |
| | | CSR1 offset | CSR1 | 0 | CSR1 verification code | Subdomain integrity verification (CSR1 subdomain verification) sha256, for integrity verification to determine whether the verification code is changed | 32 |
| | | | | 32 | CSR1 data format | Supporting xml, json, and multirecord xml = 0 | 1 |
| | | | | | | json = 1 (implemente d) | |
| | | | | | | multirecord = 2 | |
| | | | | 33 | CSR1 data compression algorithm | Supporting gzip, bzip2 gzip = 0 (implemente d) bzip2 = 1 | 1 |
| | | | | 34 | CSR1 data length N1 | Data length (excluding the header), with a byte length of 2 bytes | 2 |
| | | | | 36 | Padding | 8-byte padding (with a padding of data 00) | 4 |
| | | | | 40 | CSR1 data | Length N1 evenly divided by 8, or padded with 00 until the length is evenly divided by 8 | N1 |
| | | ... | ... | ... | ... | ... | ... |
| | | CSRN offset | CSRN | Same subdomain format as that of the CSR1 | | | |
| ... | ... | ... | ... | ... | ... | ... | ... |
| Signatur e area | Signature area | 0 | Signature algorithm | NA | Signature algorithm type | [7:0] indicates a Hash algorithm: 0x0: SHA256; 0x1: SHA3 84; others: reserved [15:8] indicates a signature algorithm: 0x0: ECC; others: reserved [31:16] indicates a signature parameter: ECC: Curve ID, same as a curve ID defined in openssl, for example, NID_secp25 6k1=714 | 4 |
| | | 4 | Signature data | NA | Signature data | Signature data | 124 |
| ... | ... | ... | ... | ... | ... | ... | ... |
| Equipm ent test area | 0x4000 - 8 | 0 | test Area | 0 | Customized data | eeprom equipment test area | 8 |

Elable (electronic label) is electronic label information of a component board of the server, with a fixed space size of 2 KB.

OEM1 (System Information) is a client customization area 1, with a fixed space size of 1 KB.

CSR, Component Self-Description Record, is complement self-description information. A component unique ID is formed by Vendor + component ID + component type that are in the CSR Header. If one board includes a plurality of components, a plurality of pieces of CSR information need to be defined.

Internal Use Area: The internal use area is an area reserved for extension, and an internal format is to be defined.

In some examples, CSR description content includes hardware information of the component board of the server, an assembly that needs to be managed and topology information, alarm information, and the like. The CSR header format is shown in Table 3. A CSR description format determines a position of a JSON. After a JSON file is compressed, the JSON file is written into the storage space corresponding to the HWSR. During automatic detection of BMC management software, the BMC management software needs to decompress a file based on a compression algorithm of the CSR header, to obtain the JSON data file. Currently, a default compression algorithm is gzip (GNUzip).

For example, the following briefly describes objects of the CSR.

For example, for an object of CSR component properties (Component Properties), basic hardware property content of CSR components is shown in Table 4.

**Table 4**

| Object name | Property name | Meaning | Data type | Value range | Description |
|---|---|---|---|---|---|
| Properties Properties | Type | Component type | String | Length: 3 bytes | Format type: "ABC" |
| | Type ID | Type ID of a component | String | Length: 2 bytes | Format type: "10" |
| | Version | CSR version | String | Length: 16 bytes | Format type: "A.B" |
| | Manufacturer | Manufacturer information | String | Length: 16 bytes | Used to display manufacturers of components on a BMC web page, and different from Vendor in UID, so that a backend json file needs to be modified accordingly |
| | PCBVersion | Version number of a PCB board | String | Maximum length of 4 | Format type: A.BB |
| | BOMVersion | Version number of a BOM board | String | Maximum length of 4 | Format type: A.BB |
| | AUEPort | Auxiliary unit expansion port | String | "True"/"False " | Auxiliary Unit Expansion Port, indicating whether the auxiliary unit expansion port is supported |
| | CUEPort | Cascade unit expansion port | String | "True"/"False " | Cascade Unit Expansion Port, indicating whether the cascade unit expansion port is supported |
| | SMCLogicUnit | SMC bit number | String | Maximum length of 16 | Example: U5 |
| | Description | Component description information | String | Maximum length of 128 | Example: 1630/1620 2P ARM Expansion board |
| | Model | Model | String | Maximum length of 64 | Example: BC83SMMB |

For example, a CSR physical topology (PhysicalTopology) mainly defines assembly management topology information of a component, for example, a management bus topology, a memory topology, or an in-band bus topology. The component may define, based on a real hardware case, content included in a CSR data file. Optionally, content of the CSR physical topology is shown in Table 5.

**Table 5**

| Object name | Subobject | Meaning | Property name | Meaning | Data type | Value range | Description |
|---|---|---|---|---|---|---|---|
| PhysicalTo pology Physical topology | Management Topology | Management bus topology | Name | Node name: a name of a compon ent manage ment bus, a name of a connecto r, or a name of a chip | String | Maximu m length of 16 | Correspond ing to values of Name in Buses, Chips, and Connectors in PhysicalOb ject |
| | | | Children | Child node of the node | Array object that is an object nested in the manage ment topology | Maximu m array node quantity of 256 | NA |
| | BusinessTop ology | Business bus topology | Name | Node name: a CPU Slot, a memory channel, a memory slot, a PCIePor t, a chip name, a UBC connecto r name, and a PCIe slot | String | Maximu m length of 16 | Correspond ing to values of Name in Chips, Connectors , and CPUSlots in PhysicalOb ject |
| | | | Children | Child node of the node | Array object that is an object nested in the manage ment topology | Maximu m array node quantity of 256 | Indicating a subordinate relationship of resources |

For example, CSR physical objects (PhysicalObjects) mainly define physical objects in a component, including a chip, a connector, a bus, a CPU slot, an I/O slot, and an OCP slot. Optionally, content of the CSR physical objects is shown in Table 6.

**Table 6**

| Object name | Property name | Meaning | Data type | Value range | Description |
|---|---|---|---|---|---|
| PhysicalObjects | MemoryChannels | Memory slot | Object array | | |

For example, a Buses object defines management bus types as shown in Table 7.

**Table 7**

| Object name | Bus classification | Meaning | Property name | Meaning | Data type | Value range | Descriptio n |
|---|---|---|---|---|---|---|---|
| Buses | I2Cs | I2C bus object | Name | Bus name | String | Maximum length of 16 | Name command : Bus + Type + BusID, for example, Bus-I2C-1 |
| | | | BusID | Bus index | Integer | 0~32 | Index |
| | | | Type | Bus type | String | Maximum length of 16 | Value: I2C |
| | ADCs | Voltage monitoring ADC bus | Name | Bus name | String | Maximum length of 16 | Name command : Bus + Type + BusID, for example, Bus-AdcBus-1 |
| | | | BusID | Bus index | Integer | 0~32 | Index |
| | | | Type | Bus type | String | Maximum length of 16 | Value: AdcBus |
| | | | VoltRefSrc | Voltage type | Inter | 0: External reference voltage 1: Internal reference voltage | Bus reference voltage type |
| | | | VoltRefVal | Reference voltage | Inter | 1~10000 | Voltage value |
| | MuxChannel | MuxChannel bus object | Name | Bus name | String | Maximum length of 16 | Name command : Bus + Type + BusID, for example, Bus-MuxChan nel-1 |
| | | | BusID | Bus index | Integer | 0~32 | Index |
| | | | Type | Bus belonging | String | Maximum length of 16 | Value: Channel |
| | LocalBus | LocalBus bus object | Name | Bus name | String | Maximum length of 16 | Name command : Bus + Type + BusID, for example, Bus-LocalBusl -1 |
| | | | BusID | Bus index | Integer | 0~32 | Index |
| | | | Type | Bus belonging | String | Maximum length of 16 | Value: LocalBus |
| | | | Addr2Data | | Inter | 1~7 | |

For example, a Connectors object defines intra-component connectors including a management bus connector and a UBC/UBCDD connector. Details are shown in Table 8.

**Table 8**

| Object name | Subobject | Meaning | Property name | Meaning | Data type | Value range | Description |
|---|---|---|---|---|---|---|---|
| Connectors | Manageme ntConnect ors | Managemen t bus connector object | Name | Management bus connector name | String | Maximum length of 32 | Name format: Connector-type-Index |
| | | | Bom | Bill of materials | String | Maximum value of 16 | |
| | | | Presence | Presence status | Objec t | Configured with a Register or null | Defaulted as present if null, or associated with the correspondi ng Register if not null |
| | | | Slot | Slot number | Intege r | Value: [0, 255) | |
| | | | SilkScre en | Silkscreen | String | Maximum length of 16 | |
| | | | ID | BoardID of the connector | Objec t | Configured with a Register or null | No BoardID in a current component |
| | | | Type | Connector type | String | Enumeratio n: ["EXU", "BCU", "IEU", "CLU", "SEU", "PRODUC T"] | Type of a component connected to the connector |
| | BusinessC onnectors | UBC/UBC DD connector | Name | UBC/UB CDD connector name | String | Maximum length of 32 | Name format: Connector-type-Index |
| | | | Connect orIndex | Index correspondin g to a connector type | Intege r | Value: [0, 128) | |
| | | | Resource StartLan e | Start lane | Intege r | Value: [0, 128) | |
| | | | Direction | Data flow direction | String | Enumeratio n: ["Downstre am", "Upstream" ] | |
| | | | DefaultL inkWidth | Link bandwidth | String | Enumeratio n: ["X1", "X4", "X8", "X16"] | |
| | | | SilkScre en | Silkscreen | String | Maximum length of 16 | |
| | | | MaxLink Rate | Link rate | String | Enumeratio n: ["PCIe 1.0", "PCIe 2.0", "PCIe 3.0", "PCIe 4.0", PCIe 5.0", "SAS 1.0", "SAS 2.0", "SAS 3.0", "SAS 4.0", "SATA 1.0", "SATA 2.0", "SATA 3.0", "SERDERS ", "HCCS"] | |
| | | | Identifyi ngCode | Identifying code | Objec t | Configured with a Register or null | |
| | | | Connect orType | Connector type | String | Enumeratio n: ["UBC", "UBCDD", "PCIe CEM ", "OCP 4C+", "NIC 4C+", "Nvme SFF8639", "RaidCard"] | |
| | | | Resource Order | Upper-level resource belonging order | Objec t array | Object array | Only valid when Direction is Downstrea m |
| | | | Ports | Port number of a UB bus connector | Objec t array | Object array | |
| | | | Zone | Information about an area to which a connector belongs | Objec t | | Only valid when Direction is Downstrea m |

For example, the ResourceOrder object describes an upper-level resource belonging order of BConnectors. Details are shown in Table 9.

**Table 9**

| Object name | Subobject | Meaning | Property name | Meaning | Data type | Value range | Description |
|---|---|---|---|---|---|---|---|
| Resourc eOrder | - | Upper-level resource belonging order | Name | Name of an upstream port connected to a connector | String | Maximum length of 32 | |
| | | | Index | Resource arrangement order | Integer | Maximum value of 32 | |

For example, the Zone object describes information about the area to which the UB bus connector belongs. Details are shown in Table 10.

**Table 10**

| Object name | Subobject | Meaning | Property name | Meaning | Data type | Value range | Description |
|---|---|---|---|---|---|---|---|
| Zone | - | Area to which the UB bus port on a basic component belongs | Area | Area number | String | Enumeration: ["A", "B", "C", "F"] "D", "E" , | Set of the UB bus ports, indicating one area logically |
| | | | ID | Subarea ID | Integer | Maximum value of 32 | Specific UB bus port index in a corresponding area |

For example, the Ports object describes the port number of the UB bus connector. Details are shown in Table 11.

**Table 11**

| Object name | Subobject | Meaning | Property name | Meaning | Data type | Value range | Description |
|---|---|---|---|---|---|---|---|
| Ports | - | Port number | ID | Port number ID | Integer | Value: [0, 0xFF] | Hexadecimal number as input data |
| | | | StartLane | Start lane corresponding to a port ID into which an uplink port is classified | Integer | Maximum value of 32 | |

For example, a Chips object defines intra-component connectors, including a management bus connector and a UB connector. Details are shown in Table 12.

**Table 12**

| Object name | Subobject | Meaning | Property name | Meaning | Data type | Value range | Description |
|---|---|---|---|---|---|---|---|
| Chips | GenericChips | Universal I2C access chip | Name | Chip name | String | Maximum length of 32 | Name command: ChipModel-Index, for example, Chip-LM75-2 |
| | | | ChipModel | Chip model | String | Maximum length of 16 | Chip model consistent with a name of a chip model supported in the BMC, where the BMC determines, based on the model + Vendor, whether management of LM75, INA220, and the like are supported |
| | | | Address | Address | Integer | Value: [0, 0xFF] | Access address Hexadecimal number as input data |
| | | | AddrWidth | Address bit width | Integer | Maximum value of 1024 | Access bit width |
| | | | OffsetWidth | Access offset | Integer | | |
| | | | Registers | Chip register | Object array | | |
| | I2CMuxs | I2C Mux chip | Name | Chip name | String | Maximum length of 32 | Name command: ChipModel-Index, for example, Chip-LM75-2 |
| | | | ChipModel | Chip model | String | Maximum value of 16 | Chip model consistent with a name of a chip model supported in the BMC, where the BMC determines, based on the model + Vendor, whether management of LM75, INA220, and the like are supported |
| | | | Address | Address | Integer | Value: [0, 0xFF] | Access address Hexadecimal number as input data |
| | | | AddrWidth | Address bit width | Integer | Maximum value of 1024 | Access bit width |
| | | | OffsetWidth | Access offset | Integer | | |
| | | | Registers | Chip register | Object array | | |
| | | | ResetChip | Chip reset | Object | Configured with a register or null | |
| | Eeproms | eeprom chip | Name | Chip name | String | Maximum length of 32 | Name command: ChipModel-Index, for example, Chip-Eeprom-2 |
| | | | ChipModel | Chip model | String | Maximum value of 16 | Chip model consistent with a name of a chip model supported in the BMC, where the BMC determines, based on the model + Vendor, whether management of LM75, INA220, and the like are supported |
| | | | Address | Address | Integer | Value: [0, 0xFF] | Access address Hexadecimal number as input data |
| | | | AddrWidth | Address bit width | Integer | Maximum value of 1024 | Access bit width |
| | | | OffsetWidth | Access offset | Integer | | |
| | | | WriteProtect | Write protection | Object | Configured with a register or null | Configuration not supported, where hardware implementation is performed according to the following rules: |
| | | | | | | | 0: write protection disabled |
| | | | | | | | 1: write protection enabled |

For example, for the Registers object array, a Register defines chip register information of the chip. Details are shown in Table 13.

**Table 13**

| Object name | Property name | Meaning | Data type | Value range | Description |
|---|---|---|---|---|---|
| Register | Name | Register name | String | Maximum length of 24 | Format: Register-ChipName-Index, for example, Register-Chip-LM75-2-1 |
| | Offset | Register access offset | Integer | | Hexadecimal number as input data |
| | Size | Register access bit width | Integer | | |
| | Mask | Register value mask | Integer | | Hexadecimal number as input data |
| | Available | Available data type | String | Enumeration: ["Standby", "PowerOn", "BIOS "] | |
| | Mode | Access mode | String | Enumeration: ["Loop", "Once"] | |
| | DebouncedCfg | Debounce policy | String | Enumeration: ["MID6", "MID3 ", "H2L2", | MID6: "six times of removing maximum and minimum values then taking average", |
| | | | | "H3L3", "H5L5", "H10L10", "H20L5", | MID3: "three times of removing maximum and minimum values then taking average", |
| | | | | "H40L4"] | H2L2: "binarization for debounce for two consecutive times", |
| | | | | | H3L3: "binarization for debounce for three consecutive times", |
| | | | | | H5L5: "binarization for debounce for five consecutive times", |
| | | | | | H10L10: "binarization for debounce for ten consecutive times", |
| | | | | | H20L5: "binarization for debounce for twenty consecutive times", and |
| | | | | | H40L4: "binarization for debounce for forty consecutive times" |
| Default Value | Default Value | Default Value | Integer | | Default value that is when an access quantity does not reach a debounce quantity |
| | Period | Access periodicity | Integer | | Unit: s |

For example, a CPU platform object is applied to a basic computing component, and definition of a computing platform of the component. Details are shown in Table 14.

**Table 14**

| Object name | Property name | Meaning | Data type | Value range | Description |
|---|---|---|---|---|---|
| CPUPlatform | Name | CPU platform name | String | Maximum length of 16: "X86" or "Kunpeng" | |

For example, a CPUSlots object is applied to the basic computing component, and definition of a CPU Socket slot of the component. Details are shown in Table 15.

**Table 15**

| Object name | Property name | Meaning | Data type | Value range | Description |
|---|---|---|---|---|---|
| CPUSlots | CPUSlots | CPU slot | Object array | | |
| | Name | CPU Slot name | String | CPU-1~CPU-16 | |
| | Index | Index | Integer | Maximum value of 32 | Slot index |
| | CPUModel | Supported CPU platform model | String | Maximum length of 16 | For example, "IceLake", "Hi1620", and "Hi1620s" |
| | SilkScreen | Silkscreen | String | Maximum length of 16 | Slot silkscreen |
| | CpuArchitecture | CPU architecture | String | Maximum length of 32 | For example, ARM |
| | CpuInstructionSet | CPU instruction set | String | Maximum length of 32 | For example, ARM V8 |

For example, the MemoryChannels object is applied to the basic computing component or a memory component, and definition of memory channel information of the component. Details are shown in Table 16.

**Table 16**

| Object name | Property name | Meaning | Data type | Value range | Description |
|---|---|---|---|---|---|
| MemoryChannels | MemoryChannels | Memory slot | Object array | | |
| | Name | Memory channel name | String | Maximum length of 32 | Format: MemoryChannel-A-B |
| | PhysicalChannelID | Physical channel index | Integer | Maximum value of 32 | Corresponding to DIMM silkscreen |
| | LogicalChannelID | Logical channel index | Integer | Maximum value of 32 | Corresponding to a memory channel in a CPU |

For example, a MemorySlots object is applied to the basic computing component or the memory component, and definition of memory slot information of the component. Details are shown in Table 17.

**Table 17**

| Object name | Property name | Meaning | Data type | Value range | Description |
|---|---|---|---|---|---|
| MemorySlots | Name | Memory module silkscreen | String | Maximum length of 32 | |
| | Index | Index | Integer | Maximum value of 32 | Slot index |
| | SilkScreen | Silkscreen | String | Maximum length of 16 | Slot silkscreen |

For example, a PSUSlots object is applied to extension component management, and definition of power source slot information. Details are shown in Table 18.

**Table 18**

| Object name | Property name | Meaning | Data type | Value range | Description |
|---|---|---|---|---|---|
| PSUSlots | PSUSlots | PSU slot | Object array | | |
| | Index | Index | Integer | Maximum value of 32 | Slot index |
| | ManagementConnector | Corresponding management connector | String | Maximum value of 16 | Management connector name |

For example, an OCPSlots object is applied to the extension component management, and definition of OCP network adapter slot information of the component. Details are shown in Table 19.

**Table 19**

| Object name | Property name | Meaning | Data type | Value range | Description |
|---|---|---|---|---|---|
| OCPSlots | OCPSlots | OCP slot | Object array | | |
| | Index | Index | Integer | Maximum value of 32 | Slot index |
| | UnifiedBusConnector | UB connector name | String | Maximum length of 16 | Corresponding UB connector name |
| | NCSISupported | Silkscreen | Bool | True or false | NCSI is supported or not |
| | NCSIPackageID | NCSI PackageID | Integer | 16 | NCSI addressing |
| | NCSISelect | NCSI selection register | String | Chip register name | |
| | NCSISelect Value | NCSI selection register specified value | Integer | | |
| | NCSISelectMask | NCSI selection register specified value Mask | Integer | | NCSISelect Value & NCSISelectMask = selection value |

For example, a PCIePorts object is applied to the basic computing component, and definition of PCIe Port information of the CPU. Details are shown in Table 20.

**Table 20**

| Object name | Property name | Meaning | Data type | Value range | Description |
|---|---|---|---|---|---|
| PCIePorts | PCIePorts | PCIe Port port | Object array | | |
| | Name | PCIe Port port name | String | Maximum value of 32 | For example, a HiLink corresponding to a 1620 CPU platform |
| | Index | PCIe Port index | Integer | Maximum value of 32 | |
| | DefaultLinkWidth | Link bandwidth | String | X1/X2/X4/X8/X 16/X32 | |

For example, a DiskSlots object is applied to definition of hard disk slot information. Details are shown in Table 21.

**Table 21**

| Object name | Property name | Meaning | Data type | Value range | Description |
|---|---|---|---|---|---|
| DiskSlots | DiskSlots | Hard disk slot | Object array | | |
| | Index | Index | Integer | Maximum value of 32 | Slot index |
| | UnifiedBusConnector | Corresponding management connector | String | Maximum value of 16 | Management connector name |
| | DiskModel | Supported hard disk model | String | "2.5" or "3.5" | |
| | NVMESupported | NVMe supported or not | Bool | True or false | |
| | SASSupported | SAS supported or not | Bool | True or false | |
| | SATASupported | SATA supported or not | Bool | True or false | |

For example, a DiskPorts object is applied to definition of the hard disk slot information. Details are shown in Table 22.

**Table 22**

| Object name | Property name | Meaning | Data type | Value range | Description |
|---|---|---|---|---|---|
| DiskPorts | DiskPorts | Hard disk slot | Object array | | |
| | NVMePorts | NVMe disk slot | Integer array | Integer starting from 0 | For example, [0, 1, 2, 3] indicates that slots 0 to 3 support an NVMe hard disk |
| | M.2Ports | M.2 disk slot | Integer array | Integer starting from 0 | For example, [0, 1, 2, 3] indicates that the slots 0 to 3 support an M.2 disk |
| | SASPorts | SAS/SA TA disk slot | Integer array | Integer starting from 0 | For example, [0, 1, 2, 3] indicates that the slots 0 to 3 support a SAS/SATA disk |

For example, a Wi-Fis object is applied to definition of a Wi-Fis port that is provided by the BMC. Details are shown in Table 23.

**Table 23**

| Object name | Property name | Meaning | Data type | Value range | Description |
|---|---|---|---|---|---|
| Wi-Fis | Wi-Fis | Wi-Fi port object | Object array | | |
| | Index | Index | Integer | Maximum value of 32 | Slot index |
| | USBPort | Corresponding USB port | String | "USBO", "USB1", ..., "USBn" | |
| | Wi-FiChips | Wi-Fi Chip model | String | | |

For example, a TypeCs object is applied to definition of a Type C port that is provided by the BMC. Details are shown in Table 24.

**Table 24**

| Object name | Property name | Meaning | Data type | Value range | Description |
|---|---|---|---|---|---|
| TypeCs | TypeCs | TypeC port object | Object array | | |
| | Index | Index | Integer | Maximum value of 32 | Slot index |
| | USBPort | Corresponding USB port | String | "USBO", "USB1", ..., "USBn" | |
| | CCChips | CC Chip model | String | | |

For example, an SDs object is applied to definition of SD card slot information. Details are shown in Table 25.

**Table 25**

| Object name | Property name | Meaning | Data type | Value range | Description |
|---|---|---|---|---|---|
| SDs | SDs | SD slot | Object array | | |
| | Index | Index | Integer | Maximum value of 32 | Slot index |
| | SDController | SD controller | String | Maximum value of 16 | SD controller model |
| | Presence | SD card presence identifier | String | Name of a register in a corresponding Chip | |

For example, a Digitrons object is applied to definition of digitron information. Details are shown in Table 26.

**Table 26**

| Object name | Property name | Meaning | Data type | Value range | Description |
|---|---|---|---|---|---|
| Digitrons | Digitrons | Digitron | Object array | | |
| | Index | Index | Integer | Maximum value of 32 | |
| | Width | Digitron width | Integer | Maximum value of 128 | |

For example, a HardDiskDraws object is applied to definition of hard disk drawer information. Details are shown in Table 27.

**Table 27**

| Object name | Property name | Meaning | Data type | Value range | Description |
|---|---|---|---|---|---|
| HardDiskDraws | HardDiskDraws | Hard disk drawer | Object array | | |
| | Index | Index | Integer | Maximum value of 32 | SMC operation index |
| | Presence | Drawer opening or closing | String | Maximum value of 32 | Corresponding to Name of a Register in Chips |

For example, a FanSlots object is applied to definition of fan information. Details are shown in Table 28.

**Table 28**

| Object name | Property name | Meaning | Data type | Value range | Description |
|---|---|---|---|---|---|
| FanSlots | FanSlots | Fan | Object array | | |
| | FanCnt | Fan slot quantity | Integer | 0-255 | |

For example, a CSRlogical object (LogicalObjects) mainly defines a logical object that is related to a physical object and that is in the component, and mainly includes monitoring sensor information. Details are shown in Table 29.

**Table 29**

| Object name | Subobject | Meaning | Property name | Meaning | Data type | Value range | Description |
|---|---|---|---|---|---|---|---|
| Sensors | Threshold Sensors | Threshold sensor object | Name | Sensor name | String | Maximum length of 12 | Prefix of device management software |
| | | | Type | Sensor type | Integer | Maximum value of 255 | Referring to IPMI specifications Table 42-Sensor Type Code |
| | | | Reading Raw | Reading source | String | Reading source | Name of a register in chips |
| | | | LowMin orThresh old | Minor low threshold | Number | Integer or decimal | |
| | | | LowMaj orThresh old | Major low threshold | Number | Integer or decimal | |
| | | | LowCrit icalThre shold | Critical low threshold | Number | Integer or decimal | |
| | | | UpMino rThresho ld | Minor high threshold | Number | Integer or decimal | |
| | | | UpMajo rThresho ld | Major high threshold | Number | Integer or decimal | |
| | | | UpCritic alThresh old | Critical high threshold | Number | Integer or decimal | |
| | | | Positive Hysteres is | Positive hysteresis | Number | Integer or decimal | |
| | | | Assertio nMask | Assertion mask | Integer | NA | Referring to the IPMI specifications, Assertion Event Mask Hexadecimal number as input data |
| | | | Deassert ionMask | Deassertion mask | Integer | NA | Referring to the IPMI specifications, DeAssertion Event Mask Hexadecimal number as input data |
| | | | EntityID | Entity ID | Integer | Maximum value of 255 | IPMI specifications, alarm entity ID |
| | | | EntityIn stance | Entity instance | Integer | Maximum value of 255 | IPMI specifications, unified number under the alarm entity ID |
| | | | Scale | Amplificati on coefficient | Integer | Maximum value of 255 | Value = reading * scale * 10 to the power of R |
| | | | R | Exponent | Integer | -127~127 | Value = reading * scale * 10 to the power of R |
| | DiscreteS ensors | Discrete sensor object | Name | Sensor name | String | Maximum length of 12 | |
| | | | Index | Sensor index | Integer | 0-255 | Sensor unique index |
| | | | Type | Sensor type | Integer | Maximum value of 255 | Referring to the IPMI specifications Table 42-Sensor Type Code |
| | | | Reading Source | Reading source | Number | Reading source | |
| | | | EventRe adingTy pe | Minor low threshold | Integer | | Referring to the IPMI specifications Table 42-Event Reading Type Code |
| | | | Assertio nMask | Assertion mask | Integer | NA | Referring to the IPMI specifications, Assertion Event Mask Hexadecimal number as input data |
| | | | Deassert ionMask | Deassertion mask | Integer | NA | Referring to the IPMI specifications, DeAssertion Event Mask Hexadecimal number as input data |
| | | | Discrete Reading Mask | Minor high threshold | Integer | Integer | Referring to the IPMI specifications, Discrete Reading Mask Hexadecimal number as input data |
| DftItems | DftItem | Equipment test item | TestID | Test ID | Integer | Integer ranging from 0 to 65535 | Mandatory |
| | | | DftID | Equipment test item ID | Integer | Integer ranging from 1 to 65535 | Mandatory |
| | | | DevNu m | Device number | Integer | Integer ranging from 0 to 42949672 95 | Mandatory |
| | | | DevTest | Physical device self-test | Object | | |
| | | | RefChip | Related chip | String | | |
| | | | RefEth | Related Ethernet interface | Object | | |
| | | | VoltTest | Voltage test | Object | | |

For example, the DevTest object describes the physical device self-test. Details are shown in Table 30.

**Table 30**

| Object name | Subobject | Meaning | Property name | Meaning | Data type | Value range | Description |
|---|---|---|---|---|---|---|---|
| DevTest | - | Physical device self-test | DevPowerStatus | Power-off self-test supported or not | Register object | | |
| | | | RefChip | Related physical device | String | | |

For example, the RefEth object describes a related Ethernet interface. Details are shown in Table 31.

**Table 31**

| Object name | Subobject | Meaning | Property name | Meaning | Data type | Value range | Description |
|---|---|---|---|---|---|---|---|
| RefEth | - | Related Ethernet interface | GroupID | Group to which eth belongs | Integer | Integer ranging from 0 to 255 | |
| | | | EthNum | Device ETH ID | Integer | Integer ranging from 0 to 255 | |

For example, the VoltTest object describes the voltage test. Details are shown in Table 32.

**Table 32**

| Object name | Subobject | Meaning | Property name | Meaning | Data type | Value range | Description |
|---|---|---|---|---|---|---|---|
| VoltTest | - | Voltage test | DevPower Status | Power-off self-test supported or not | Register object | | |
| | | | Volt Value | Voltage value | String | | |
| | | | PowOnSt and Value | Standard voltage during power-on | Integer | Integer ranging from 0 to 4294967295 | |
| | | | PowOffSt and Value | Standard voltage during power-off | Integer | Integer ranging from 0 to 4294967295 | |
| | | | HystValue | Voltage hysteresis | Integer | Integer ranging from 0 to 4294967295 | |

In some other examples, product self-description information (PSR) includes product topology information and product heat dissipation information. Based on product information self-description, a server is assembled by components, and a product can implement self-adaptive management and maintenance.

For example, a product description (Product Description) of the PSR may be shown in Table 33.

**Table 33**

| Object name | Subobject | Meaning | Property name | Meaning | Data type | Value range | Description |
|---|---|---|---|---|---|---|---|
| Properties | TypeID | Type ID | NA | NA | String | "00" | |
| | Type | Type | NA | NA | String | "PSR" | "PSR" |
| | Description | | | | | | |
| | Version | Version | NA | NA | String | Maximum length of 32 | |
| | ProductUniqu eID | Product unique identifying code | NA | NA | String | Maximum length of 32 | |
| | ManufactureN ame | Manufacturer | NA | NA | String | Maximum length of 16 | |
| | ProductName | Product name | NA | NA | String | Maximum length of 32 | For example, "TS200-2280 V2" |
| | ProductAlias | Product alias | NA | NA | String | Maximum length of 32 | For example, "VF" |

The following briefly describes an example of a product component topology object (ComponentTopology) of the PSR.

For example, for a component management bus connection topology, information about the component management bus connection topology may be shown in Table 34.

**Table 34**

| Object name | Subobject | Meaning | Property name | Meaning | Data type | Value range | Description |
|---|---|---|---|---|---|---|---|
| Component Manageme ntTopology | EXUCom ponentID | Management extension module component ID | NA | NA | String | Maximum length of 32 | Vendor + Component Type + ID |
| | Compone ntSystem Name | Component system name | NA | NA | String | Maximum length of 16 | The component system name is a unique identifier of a component in a system |
| | DeviceMa nagement Connector | Management bus connector on an extension module | NA | NA | String | Maximum length of 16 | Name of the manageme nt bus connector on the extension module |
| | Compatibl eCompon ent | Component that may be connected to the management bus connector | Compon entID | Connected component ID | String | Maximum length of 32 | Vendor + Component Type + ID |
| | | | HostMa nagemen tConnect or | Connector on the connected component | String | Maximum length of 16 | Name of the connector on the component |
| | | | Compon entSyste mName | Component system name | String | Maximum length of 16 | System name of the component connected to the connector |

For example, for a component UB bus connection topology, information about the component UB bus connection topology may be shown in Table 35.

**Table 35**

| Object name | Subobject | Meaning | Property name | Meaning | Data type | Value range | Description |
|---|---|---|---|---|---|---|---|
| Component UnifiedBus Topology | ComponentID | ComponentID | NA | NA | String | Maximum length of 32 | Vendor + Component Type + ID |
| | Compone ntSystem Name | Component system name | NA | NA | String | Maximum length of 16 | System name of a component, avoiding a same component in a system |
| | DeviceUn ifiedBusC onnector | UB connector on a component | NA | NA | String | Maximum length of 16 | Name of the UB connector on the component |
| | Compatibl eCompon ent | Component that may be connected to the connector | Component ID | Connected component ID | String | Maximum length of 32 | Vendor + Component Type + ID |
| | | | HostUnifie dBusConne ctor | Connector on the connected component | String | Maximum length of 16 | Name of the connector on the component |
| | | | Component SystemNa me | Component system name | String | Maximum length of 16 | System name of the connector connected to the component |

For example, a correspondence between a panel slot in the system and a component connection may be shown in Table 36.

**Table 36**

| Object name | Property name | Meaning | Data type | Value range | Description |
|---|---|---|---|---|---|
| SlotsDescription | SlotSilk | Slot silkscreen | String | Maximum length of 8 | Panel slot silkscreen |
| | SlotType | Slot type | String | Maximum length of 16 "DISK 2.5", "DISK 3.5", "PCIe HHHL", and "PCIe FHHL" | Identifying a hard disk slot, a PCIe slot, a slot size, and the like |
| | ComponentID | Component ID | String | Maximum length of 32 | Vendor + Component Type + ID |
| | ComponentSy stemName | Component system name | String | Maximum length of 16 | Component system name, uniquely identifying a component and differentiating the component from components of a same type existing in a same system |
| | DeviceConnec tor | Component connector name | String | Maximum length of 16 | Connector on a component |

For example, a correspondence between the panel slot in the system and an IEU unit connection may be shown in Table 37.

**Table 37**

| Object name | Property name | Meaning | Data type | Value range | Description |
|---|---|---|---|---|---|
| IEUPCIeSlotInfo | IEUPCIeSlotInfo | IEU configuration object array | | | |
| | IEUSlot | IEU slot number | Integer | Maximum value of 128 | Component slot number |
| | PCIeStartSlot | Starting value in a system panel slot corresponding to a slot number on the IEU unit | Integer | Maximum value of 128 | |
| | Configurations | IEU configuration identifier object array | Object array | Referring to a definition in the following sub-table for details | Corresponding to a universal set of configurations supported in an IOM slot |

For example, the Configurations object defines a set of configurations supported in a specific slot of IEUPCleSlotInfo, as shown in Table 38.

**Table 38**

| Object name | Property name | Meaning | Data type | Value range | Description |
|---|---|---|---|---|---|
| Configurations | ComponentUniqueID | Component vendor UID | String | 24 bytes | |
| | Index | Component index | Integer | Maximum value of 128 | |
| | CableCheck | Expected cable check configuration | Object array | Referring to a definition in the following sub-table for details | |

For example, an expected cable connection relationship configuration of a specific slot in the Configurations defined in the CableCheck object may be shown in Table 39.

**Table 39**

| Object name | Property name | Meaning | Data type | Value range | Description |
|---|---|---|---|---|---|
| CableCheck | SrcPortName | UB port name of a basic component | String | Length: 3 bytes | For example, "Ala" or "B2a" |
| | TargetPortID | Port number defined in an IEU unit | Integer | Value: [0, 0xFF] | Hexadecimal number as input data |

For example, a correspondence between the panel slot in the system and an SEU component connection may be shown in Table 40.

**Table 40**

| Object name | Property name | Meaning | Data type | Value range | Description |
|---|---|---|---|---|---|
| SEUHddSlotInfo | SEUHddSlotInfo | SEU configuration object array | | | |
| | SEUHDDBay | SEU component slot number | Integer | Maximum value of 128 | SEU component slot number |
| | HddStartSlot | Starting value in a system panel slot correspondin g to a slot number on the SEU component | Integer | Maximum value of 128 | |
| | Configurations | SEU configuration object array | Object array | Referring to a definition in the following sub-table for details | Corresponding to a universal set of configurations supported in an SEU slot |

For example, the Configurations object defines a set of configurations supported in a specific slot of SEUHddSlotInfo, as shown in Table 41.

**Table 41**

| Object name | Property name | Meaning | Data type | Value range | Description |
|---|---|---|---|---|---|
| Configurations | ComponentUniqueID | Component vendor UID | String | 24 bytes | |
| | Index | Component index | Integer | Maximum value of 128 | |
| | CableCheck | Expected cable check configuration | Object array | Referring to a definition in the following sub-table for details | |

For example, an expected cable connection relationship configuration of a specific slot in the Configurations defined in the CableCheck object may be shown in Table 42.

**Table 42**

| Object name | Property name | Meaning | Data type | Value range | Description |
|---|---|---|---|---|---|
| CableCheck | SrcPortName | UB port name of a storage unit | String | Length: 3 bytes | For example, "Ala" or "B2a" |
| | TargetPortID | Port number defined in an STM component | Integer | Value: [0, 0xFF] | Hexadecimal number as input data |

For example, a correspondence between the panel slot in the system and a Flex I/O flexible plug-in card connection may be shown in Table 43.

**Table 43**

| Object name | Property name | Meaning | Data type | Value range | Description |
|---|---|---|---|---|---|
| FlexIOSlotInfo | IEUPCIeSlotInfo | Flex I/O configuration object array | | | |
| | FlexIOSlot | Flex I/O slot number | Integer | Maximum value of 128 | Component slot number |
| | PCIeStartSlot | Starting value in a system panel slot corresponding to a slot number on the Flex I/O | Integer | Maximum value of 128 | |
| | Configurations | Flex I/O configuration object array | Object array | Referring to a definition in the following sub-table for details | Corresponding to a universal set of configurations supported in an IOM slot |

For example, the Configurations object defines a set of configurations supported in a specific slot of IEUPCIeSlotInfo, as shown in Table 44.

**Table 44**

| Object name | Property name | Meaning | Data type | Value range | Description |
|---|---|---|---|---|---|
| Configurations | ComponentUniqueID | Component vendor UID | String | 24 bytes | |
| | Index | Component index | Integer | Maximum value of 128 | |
| | CableCheck | Expected cable check configuration | Object array | Referring to a definition in the following sub-table for details | |

For example, an expected cable connection configuration of a specific slot in the Configurations defined in the CableCheck object may be shown in Table 45.

**Table 45**

| Object name | Property name | Meaning | Data type | Value range | Description |
|---|---|---|---|---|---|
| CableCheck | SrcPortName | UB port name of a basic component | String | Length: 3 bytes | For example, "Ala" or "B2a" |
| | TargetPortID | Port number defined in an IEU unit | Integer | Value: [0, 0xFF] | Hexadecimal number as input data |

The foregoing describes in detail the configuration information management method with reference to the accompanying drawings according to this application, and the following further describes a management apparatus with reference to the accompanying drawings according to this application.

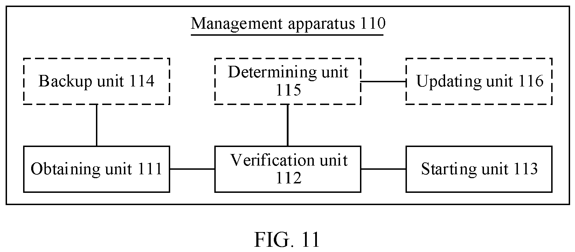

To implement the foregoing functions, FIG. 11 is a diagram of a structure of a configuration information management apparatus 110 according to an embodiment of this application. The management apparatus 110 is used in a server (for example, the foregoing conventional server or the server of the new infrastructure), and is configured to perform the foregoing configuration information management method, for example, the methods shown in FIG. 4, FIG. 5, FIG. 6, FIG. 8, or FIG. 9. The management apparatus 110 may include an obtaining unit 111, a verification unit 112, and a starting unit 113.

The obtaining unit 111 is configured to obtain first configuration information and second configuration information. The verification unit 112 is configured to verify consistency between the first configuration information and the second configuration information, and obtain a consistency verification result. The starting unit 113 is configured to start the server based on the consistency verification result. The first configuration information is configuration information stored in a BMC of the server, and the second configuration information is backup data that is of configuration information of the server and that is backed up at a first moment. In an example, with reference to FIG. 5, the obtaining unit 111 may be configured to perform S201, the verification unit 112 may be configured to perform S202, and the starting unit 113 may be configured to perform S203 or S204.

Optionally, the management apparatus 110 further includes a backup unit 114, which is configured to back up the configuration information of the server at the first moment, a moment before the obtaining unit 111 obtains the first configuration information and the second configuration information, to obtain the second configuration information. The first moment is any moment before the server is started this time, and the second configuration information is stored in storage space that is of the server and that is accessible to the BMC. In an example, with reference to FIG. 4, the backup unit 114 may be configured to perform S102.

Optionally, when the server that includes the management apparatus 110 is the server of the new infrastructure, the storage space that is of the server and that is accessible to the BMC is storage space of a component in the server. The component includes a basic computing unit and/or a functional component. The functional component includes at least one of a storage unit, an input/output I/O unit, an acceleration unit, a memory expansion unit, a heat dissipation component, a power supply component, a computing component, and a management component. The storage space that is of the component and that is accessible to the BMC is a non-volatile storage medium in the component.

Optionally, when the server of the management apparatus 110 is the conventional server, the storage space that is of the server that is accessible to the BMC is a non-volatile storage medium disposed on a mainboard of the server.

Optionally, the management apparatus 110 further includes a determining unit 115, which is configured to determine the first configuration information or the second configuration information as target configuration information when the consistency verification result is that the verification of the consistency between the first configuration information and the second configuration information succeeds. The starting unit 113 is specifically configured to start the server based on the target configuration information. In an example, with reference to FIG. 5, the determining unit 115 and the starting unit 113 may be configured to perform S203.

Optionally, the determining unit 115 is further configured to determine the first configuration information or the second configuration information as the target configuration information according to a preset rule when the consistency verification result is that the verification of the consistency between the first configuration information and the second configuration information fails. The preset rule indicates a manner in which configuration information of a higher version, either the first configuration information or the second configuration information, is determined as the target configuration information, or a manner in which the target configuration information is determined from the first configuration information and the second configuration information based on a user indication, or a manner in which configuration information recording time information that is closer to a current moment, either the first configuration information or the second configuration information, is determined as the target configuration information. The starting unit 113 is specifically configured to start the server based on the target configuration information. In an example, with reference to FIG. 5, the determining unit 115 and the starting unit 113 may be configured to perform S204.

Optionally, the management apparatus 110 further includes an updating unit 116. The updating unit is configured to update configuration information, either the first configuration information or the second configuration information, that is different from the target configuration information to the target configuration information. In an example, with reference to FIG. 5, the updating unit 116 may be configured to perform S205.

Optionally, the verification unit 112 is further configured to, before the consistency between the first configuration information and the second configuration information is verified, verify integrity of the first configuration information and integrity of the second configuration information to obtain an integrity verification result, and when the integrity verification result is a success, perform an operation of verifying the consistency between the first configuration information and the second configuration information. In an example, with reference to FIG. 6, the verification unit 112 may be configured to perform S2011.

For specific descriptions of the foregoing optional manners, refer to the foregoing method embodiments. Details are not described herein again. In addition, an explanation of any management apparatus 110 provided above and descriptions of beneficial effects can refer to the corresponding method embodiments mentioned above. Details are not described again. In an example, with reference to FIG. 3, functions implemented by the verification unit 112 and the determining unit 115 in the management apparatus 110 may be implemented by using the processor 301 in FIG. 3 to execute the program code in the storage 302 in FIG. 3. A function implemented by the obtaining unit 111 may be implemented by using the communication interface 303 in FIG. 3. Functions implemented by the starting unit 113, the backup unit 114, and the updating unit 116 may be implemented by using the processor 301 in FIG. 3 to execute the program code in the storage 302 in FIG. 3, and implemented by using the communication interface 303 in FIG. 3.

This application further provides a computer device. Optionally, the computing device has the hardware structure shown in FIG. 3. The computing device includes the foregoing management apparatus. The management apparatus in the computing device may be configured to perform the methods described in FIG. 4, FIG. 5, FIG. 6, or FIG. 7. Details are not described again.

A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application. It should be noted that, in FIG. 11, module division is an example, and is merely a logical function division. In actual implementation, another division manner may be used. For example, two or more functions may be integrated into one processing module. The integrated module may be implemented in a form of hardware, or may be implemented in a form of a software functional module.

An embodiment of this application further provides a computer program product, and a computer-readable storage medium configured to store the computer program product. The computer program product may include one or more program instructions. When the one or more program instructions are run by one or more processors, all the foregoing functions or some functions described in FIG. 4, FIG. 5, FIG. 6, FIG. 8, or FIG. 9 may be provided. Therefore, for example, one or more features in S201 to S205 in FIG. 5 may be undertaken by one or more instructions in the computer program product. In some examples, the management apparatus described according to FIG. 4, FIG. 5, FIG. 6, FIG. 8, or FIG. 9 may be configured to provide operations, functions, or actions in response to one or more program instructions stored in the computer-readable storage medium.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer instructions are executed on a processor, the procedures or functions according to embodiments of this application are all or partially generated.

The foregoing descriptions are only specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A configuration information management method, wherein the method is applied to a server that comprises a management apparatus, the method is performed by the management apparatus, and the method comprises:
obtaining first configuration information and second configuration information, wherein the first configuration information is configuration information stored in a baseboard management controller BMC of the server, and the second configuration information is backup data that is of the configuration information of the server and that is backed up at a first moment;
verifying consistency between the first configuration information and the second configuration information to obtain a consistency verification result; and
starting the server based on the consistency verification result.

2. The method according to claim 1, wherein before the obtaining first configuration information and second configuration information, the method further comprises:
backing up the configuration information of the server at the first moment to obtain the second configuration information, wherein the first moment is any moment before the server is started this time, and the second configuration information is stored in storage space that is of the server and that is accessible to the BMC.

3. The method according to claim 2, wherein when the server is a server of a new infrastructure, the storage space that is of the server and that is accessible to the BMC is storage space of a component in the server, the component comprises a basic computing unit and/or a functional component, the functional component comprises at least one of a storage unit, an input/output I/O unit, an acceleration unit, a memory expansion unit, a heat dissipation component, a power supply component, a computing component, and a management component, and the storage space that is of the component and that is accessible to the BMC is a non-volatile storage medium in the component.

4. The method according to claim 2, wherein when the server is a conventional server, the storage space that is of the server and that is accessible to the BMC is a non-volatile storage medium disposed on a mainboard of the server.

5. The method according to any one of claims 1 to 4, wherein the starting the server based on the consistency verification result comprises:
when the consistency verification result is that the verification of the consistency between the first configuration information and the second configuration information succeeds, determining the first configuration information or the second configuration information as target configuration information; and
starting the server based on the target configuration information.

6. The method according to any one of claims 1 to 5, wherein the starting the server based on the consistency verification result comprises:
when the consistency verification result is that the verification of the consistency between the first configuration information and the second configuration information fails, determining, according to a preset rule, the first configuration information or the second configuration information as the target configuration information, wherein the preset rule indicates a manner in which configuration information of a higher version, either the first configuration information or the second configuration information, is determined as the target configuration information, or a manner in which the target configuration information is determined from the first configuration information and the second configuration information based on a user indication, or a manner in which configuration information recording time information that is closer to a current moment, either the first configuration information or the second configuration information, is determined as the target configuration information; and
starting the server based on the target configuration information.

7. The method according to claim 6, wherein the method further comprises:
updating configuration information, either the first configuration information or the second configuration information, that is different from the target configuration information to the target configuration information.

8. The method according to claim 1, wherein before the verifying consistency between the first configuration information and the second configuration information, the method further comprises:
verifying integrity of the first configuration information and integrity of the second configuration information to obtain an integrity verification result; and when the integrity verification result is a success, performing the operation of verifying consistency between the first configuration information and the second configuration information.

9. A configuration information management apparatus, wherein the management apparatus is used in a server, and the management apparatus is configured to perform the method according to any one of claims 1 to 8 in a startup phase of the server.

10. The apparatus according to claim 9, wherein the management apparatus is a baseboard management controller BMC of the server.

11. A server, wherein the server comprises a plurality of components and a baseboard controller BMC, the components comprise a basic computing unit and/or a functional component, and the functional component comprises at least one of a storage unit, an input/output I/O unit, an acceleration unit, a memory expansion unit, a heat dissipation component, a power supply component, a computing component, and a management component; the BMC stores configuration information of the server, the BMC is configured to back up the configuration information of the server in storage space of the plurality of components, and the BMC is further configured to perform the method according to any one of claims 1 to 8 in a startup phase of the server.
